# EUROPÄISCHE PATENTSCHRIFT

(11) **EP 3 029 973 B1**
(45) Veröffentlichungstag und Bekanntmachung des Hinweises auf die Patenterteilung: **06.05.2020**
(21) Anmeldenummer: 15196421.0
(22) Anmeldetag: 01.12.2015
(51) Int. Cl.: H04W 12/12, H04L 29/06, H04Q 3/00

(54) **VERFAHREN UND EINE VORRICHTUNG ZUR SICHERUNG EINER SIGNALISIERUNGSSYSTEM-NR. 7-SCHNITTSTELLE**
METHOD AND A DEVICE FOR SECURING A SIGNALLING SYSTEM 7-INTERFACE
PROCEDE ET DISPOSITIF DE SECURISATION D'UNE INTERFACE DE SYSTEME DE SIGNALISATION NUMERO 7{J}

(30) Priorität: 02.12.2014 DE 102014117713
(43) Veröffentlichungstag der Anmeldung: 08.06.2016
(73) Patentinhaber: GSMK Gesellschaft für sichere Mobile Kommunikation mbH, 10117 Berlin (DE)
(72) Erfinder: Engel, Tobias, 10247 Berlin (DE); Freyther, Holger, 10439 Berlin (DE)
(74) Vertreter: 2K Patentanwälte Blasberg Kewitz & Reichel

(56) Entgegenhaltungen:
- WO-A1-2014/187696
- WO-A2-2007/041346
- US-A- 5 345 595
- US-A1- 2011 014 939
- US-A1- 2011 041 176

## Beschreibung

Die Erfindung betrifft ein Verfahren und eine Vorrichtung zur Sicherung einer Signalisierungssystem- Nr. 7-Schnittstelle, SS7 Schnittstelle, die einen Zugang zu einem lokalen Mobilfunknetz erlaubt, gegenüber einem externen System.

### Gebiet der Erfindung:

Das Signalisierungssystem Nr. 7 (nachfolgend SS7) genannt, wurde in den 70er Jahren von der ITU standardisiert und dient als Vermittlungsprotokoll dem Aufbau von Telefonverbindungen.

SS7 ist eine Sammlung von Protokollen und Verfahren für die Signalisierung in Telekommunikationsnetzen.
Es kommt im öffentlichen Telefonnetz, in Zusammenhang mit ISDN, Fest- und Mobilfunknetz und seit etwa 2000 auch verstärkt in VoIP-Netzen zum Einsatz. In VoIP-Netzen wird SS7 nur im Zusammenhang mit Media Gateway Controllern angewendet. Die Protokollsammlung ist auch unter anderen Bezeichnungen wie Signalling System Number 7, Zeichengabesystem Nr. 7, Zentrales Zeichengabesystem Nr. 7, ZZS7, CCITT-Zeichengabesystem Nr. 7, Central Signalling System #7 und C7 bekannt.

Von der ITU-T (früher CCITT) werden unter der Bezeichnung "ITU-T Recommendation Q.xxx" in den Serien Q.600 und Q.700 detaillierte Vorschläge für die Implementierung nationaler und internationaler Signalisierungsnetze erarbeitet. Die Vorschläge werden von normativen Organisationen wie ETSI (European Telecommunication Standardisation Institute) oder ANSI (American National Standardisation Institute) sowie von IETF (Internet Engineering Task Force) durch RFCs in verbindliche Normen umgesetzt.

SS7 ist heutzutage das gängigste und häufig einzige Signalisierungssystem in nationalen und internationalen Telekommunikationsnetzen. In der Folge dieser Popularität wurden diverse Protokolle des SS7-Stapels für SS7oIP (Signaling System Over Internet Protocol) spezifiziert und entwickelt sowie eingesetzt.

Telekommunikationseinrichtungen wie Vermittlungen oder Gateways arbeiten mit SS7-Protokollstapeln, die an die nationalen Normen oder Vorgaben der einzelnen Dienstanbieter angepasst sind. Wie die meisten ITU-T Empfehlungen sind die Serien Q.600 und Q.700 sehr variabel aufgebaut und erlauben eine Vielzahl von Variationen. Daher gibt es im Gegensatz zum Beispiel von IP keinen einheitlichen SS7-Protokollstapel, sondern spezifische Implementierungen.

SS7 ist ein zentrales Zeichengabesystem oder "Common Channel Signalling System". Ein eigener Kanal in einem Übertragungssystem (üblicherweise ein Multiplexsystem) überträgt die Signalisierungsinformationen für alle Nutzerkanäle (bearer channels) bzw. Sprachkanäle. Diese Signalisierungsinformation kann zum Beispiel Informationen über gerufene oder rufende Nummer, Gebühren, besetzt, Rufnummer unbekannt etc. enthalten.

SS7 ist ein hocheffizientes Protokoll, das, im Vergleich zu anderen Kommunikationsarten, mit vergleichsweise geringen Datenmengen auskommt.

In den Mobilkommunikationsnetzen ist der Signalisierungsanteil wegen der Mobilität und der Nutzung von SMS sehr hoch. Es gibt sowohl im Festnetz, vor allem aber im Mobilnetz, Systeme, welche nur Signalisierverbindungen aufweisen, wie zum Beispiel ein SMS Center (SMSC).

SS7 bietet Verfahren zur schnellstmöglichen Fehlerbehebung und zum Auffinden von alternativen Pfaden. Die Umschaltzeiten im Fehlerfall oder beim Ausfall eines Knotens liegen in der Regel im Bereich von einigen Millisekunden.

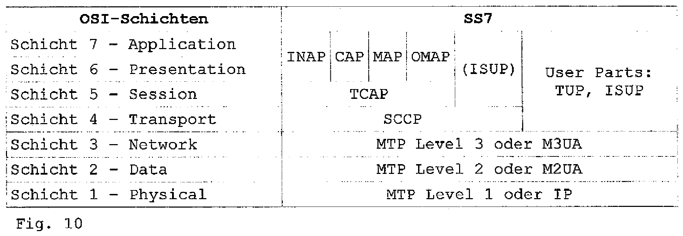

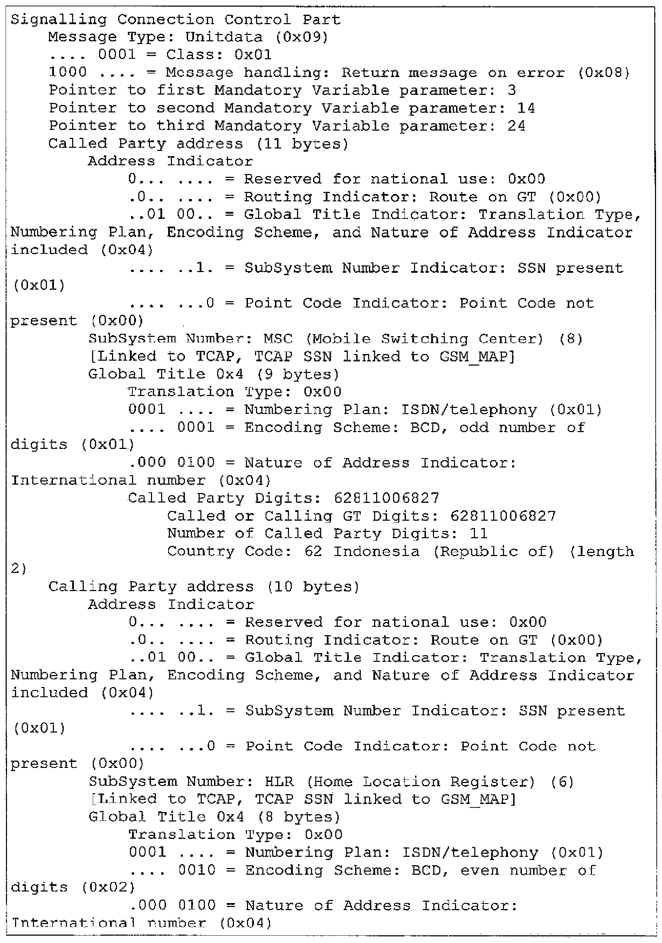

Die wichtigsten Komponenten von SS7 sind Empfehlungen, die unterschiedliche Teilaspekte des komplexen Kommunikationsmodells beschreiben (siehe Fig. 10)

### MTP - Message Transfer Parts

MTP oder Message Transfer Part beschreibt, wie Signalisierungsinformationen übertragen werden. Dazu gehören Definitionen der elektrischen oder optischen Schnittstellen, Details, wie einzelne Nachrichten voneinander getrennt werden und wie einzelne Vermittlungen oder besser im Jargon der ITU-T signalling points adressiert werden.
MTP Level 1 legt die physikalischen, elektrischen und funktionalen Parameter für eine Zeichengabestrecke fest. Dazu gehören Spezifikationen wie Taktrate, Spannungen, Kodierungsverfahren sowie Abmessung und Form der Steckverbinder. Üblich sind Schnittstellen, die den Empfehlungen V.35 oder G.703 entsprechen. Level 1 stellt die Bitübertragungsschicht für eine Zeichengabestrecke dar, die in einem digitalen Netz üblicherweise aus einem 64-kbit/s-Kanal besteht.
MTP Level 2 legt die Verfahren für einen fehlerfreien Austausch von Nachrichten über eine Zeichengabestrecke fest. Dazu gehören Funktionen, um die Nachrichtenverbindung zu aktivieren oder zu beenden, nach Fehlern zu überprüfen und sie gegebenenfalls zu beheben. Die Nachrichten werden durch Flags voneinander getrennt. Level 2 ist im Aufbau der häufig verwendeten Prozedur HDLC ähnlich, allerdings um einige Funktionen erweitert.
MTP Level 3 definiert das Zusammenwirken mehrerer einzelner Zeichengabestrecken. Alle Aspekte, die auf logischer Ebene für den Austausch von Nachrichten zwischen zwei signalling points über mehrere Zeichengabestrecken hinweg gemeinsam sind, werden geregelt. Dazu gehört die Weiterleitung ankommender Nachrichten zur gewünschten Zeichengabestrecke. Die Separierung dieser Funktionen in einem eigenen Level 3 dient auch der Verwaltung des Zeichengabenetzes: Zeichengabestrecken können hinzugefügt werden oder im Fehlerfall auf einen Ersatzweg umgeschaltet werden, ohne dass die Konfiguration auf höheren, abstrakteren Ebenen geändert werden muss.

E1 LSL- und HSL-Verbindungen: E1 LSL wurden seit der Einführung von SS7 eingesetzt. LSL (Low Speed Link) bezeichnet die Verbindungen, in welchen 64-kbit/s-Zeitschlitze zum Einsatz gelangen. Da pro Linkset lediglich 16 Zeitschlitze geschaltet werden können, ist die Bandbreite entsprechend eingeschränkt. Dies ergibt pro Linkset lediglich eine Bandbreite von 1 Mbit/s. Seit einiger Zeit sind die HSL (High Speed Link) spezifiziert worden. Die HSL erlauben pro Zeitschlitz eine Bandbreite von 2 Mbit/s, was für ein Linkset eine theoretische Bandbreite von 32 Mbit/s ergeben würde. HSL kommen zum Einsatz, wo die Bandbreite mit LSL zu klein ist. Da aber HSL sehr teuer ist, wird HSL nur dann eingesetzt, wenn zum Beispiel SS7oIP, die preisgünstigste Alternative, (noch) nicht machbar ist aufgrund von fehlenden Anschlussmöglichkeiten im Netz.

Linkset bezeichnet die Logische Verbindung zwischen zwei Signaling Point Codes (SPCs). Linksets werden nur bei E1-Verbindungen, nicht jedoch bei SS7oIP verwendet. Die Beschränkung auf 16 Zeitschlitze pro Linkset ist auf die fehlenden Bit für den SLC in ITU zurückzuführen, da der SLC (Signalling Link Code) nur 4 Bit aufweist. In ANSI Standard stehen für den SLC jedoch 8 Bit zur Verfügung, was dann 256 Zeitschlitze ermöglicht. Wenn zwischen zwei Pointcodes jedoch mehr Zeitschlitze (Bandbreite) zur Verfügung stehen müssen und HSL nicht möglich ist, muss ein zweites Linkset erstellt werden. Damit dies ermöglicht werden kann, wird im Signalling Transfer Point (STP) ein Capability Pointcode eingerichtet, welcher erlaubt, ein weiteres Linkset zu definieren.

In den User Parts werden die Funktionen beschrieben, die einem Benutzer zur Verfügung stehen. Diese Funktionen können vom verwendeten Dienst (ISDN, analoges Telefon, Mobilfunk) abhängig sein und werden deshalb getrennt beschrieben. Die wichtigsten User Parts sind:

TUP Telephone User Part ist der einfachste User Part, der nur Basisfunktionen beschreibt. Dazu gehören Informationen wie Verbindungsaufbau (anrufen), Verbindungsabbau (auflegen), besetzt oder Rufnummer unbekannt.

ISUP ISDN User Part beschreibt die Funktionen, die ISDN-Benutzern zur Verfügung stehen. Dazu gehört als wichtigstes Element die Beschreibung des Dienstes oder bearer capability. ISDN erlaubt, verschiedene Endgeräte wie Telefon, Fax oder Computer an demselben Anschluss zu betreiben. Bei einer Verbindung im ISDN wird immer eine Beschreibung des Dienst-Typs mitgesendet, damit nur das Endgerät antwortet, das den gewünschten Dienst auch unterstützt. Dadurch wird zum Beispiel verhindert, dass ein Fax-Gerät versucht, eine Sprachverbindung anzunehmen, wenn beide Endgeräte ISDN-fähig sind.

DUP Data User part ist gedacht, um spezielle Informationen für Datenverbindungen zu übermitteln.

Der meist eingesetzte Part ist heutzutage ISUP.

Signalling Connection Control Part (SCCP) ist eine Schicht, die auf MTP Level 3 aufsetzt und eine End-zu-End-Signalisierung im Signalisierungsnetz erlaubt. Im SCCP werden vier Dienstklassen zur Verfügung gestellt:
Klasse 0: Verbindungsloser Basisdienst: Längere Nachrichten können geteilt werden. Für die korrekte Zusammensetzung dieser Teile sind dann höhere Schichten verantwortlich
Klasse 1: Verbindungsloser Dienst mit Folgenummern: Diese Nummer (SLS-Code) ist 4 oder 8 Bit lang (ITU-T oder ANSI Standard). Zusammengehörige Nachrichten verwenden den gleichen SLS-Code. Werden mehrere Verbindungen (linkset) für eine Nachricht benutzt, so unterscheidet sich die Folgenummer in den niederwertigsten Bits.
Klasse 2: Verbindungsorientierter Basisdienst: Die Signalisierungsverbindung muss auf- und abgebaut werden.
Klasse 3: Verbindungsorientierter Basisdienst mit Flusskontrolle

Transaction Capabilities Application Part (TCAP) setzt auf SCCP auf und ermöglicht den darüberliegenden Protokollen, wie zum Beispiel INAP, CAP, MAP und OMAP über das SS7-Netzwerk weltweit zu kommunizieren. Die im Folgenden erklärt werden.

Über Intelligent Network Application Part (INAP) werden die Funktionen für intelligente Netze (IN) abgewickelt. Dazu gehören unter anderem Rufnummernmitnahme (LNP Local Number Portability) oder 0800-Nummern, die abhängig vom Standort des Anrufers zur nächstgelegenen Zentrale weitervermittelt werden.

CAMEL Application Part (CAP) wird in Mobilfunknetzen genutzt und dient der Customised Applications for Mobile networks Enhanced Logic (CAMEL).

MAP (Mobile Application Part) dient der Kommunikation zwischen den verschiedenen Bestandteilen des Mobilfunknetzes (unter anderem HLR, VLR, SMSC). Der Standard kann auch zur Kommunikation zwischen Mobilfunknetzen verschiedener Anbieter verwendet werden und ist somit eine der Voraussetzungen für die Roaming-Funktionalität. Mittels Roaming kann sich ein Mobilfunkteilnehmer in Fremdnetze einbuchen (zum Beispiel ausländischen Mobilbetreiber mit Roamingvertrag oder um Notrufe absetzen zu können, auch wenn der Mobilfunkteilnehmer nicht im Versorgungsbereich des eigenen Betreibers ist). Die abrechnungsrelevanten Bestandteile werden durch Transferred Account Procedure (TAP) übertragen.
Short Messages (SMS) werden nebst dem Roaming und der Steuerung der Gesprächsverbindungen auch im MAP übertragen. Weiter werden auch Funktionen zur Feststellung des Gerätetyps und die IMEI im MAP übertragen, damit mobiltelefonspezifische Konfigurationen vom Mobil-Operator auf das Endgerät übertragen werden können.

Operations, Maintenance and Administration Part (OMAP)stellt Funktionen für Betrieb, Pflege und Verwaltung bereit, umfassend zum Beispiel Softwarepflege, Konfiguration und das Einrichten von Rufnummernblöcken für Telefon-Mobilfunkteilnehmer.

Ursprünglich für die Signalisierung bei Festnetzanschlüssen gedacht, wurde SS7 in den 80er und 90er Jahren um viele Zusätze zur Unterstützung von Mobilfunknetzwerken erweitert, um zum Beispiel SMS, Roaming, Prepaid und Datenverkehr zu ermöglichen. Gleichzeitig haben mittlerweile nicht mehr nur die staatlichen Telekommunikationsgesellschaften Zugang zu SS7 sondern tausende kleinerer Gesellschaften und Anbieter weltweit.

Ein Protokollteil von SS7, der für die Vermittlung von Mobilkommunikation zuständig ist, ist SS7/MAP (Mobile Application Part). SS7/MAP wird sowohl innerhalb der Netzstruktur eines Mobilfunkanbieters als auch in der Kommunikation der Mobilfunkanbieter untereinander, z.B. für Roaming eingesetzt. An dieser Stelle bieten sich nun durch die historische Entwicklung des SS7-Protokolls und durch unzureichende Implementierung von Schutzmechanismen in Netzwerkelementen Angriffspunkte durch externe SS7-Nutzer. Diese können bei den Mobilfunkanbietern zur Durchführung von Betrug, Verletzung der Privatsphäre der Mobilfunkkunden bis hin zum Abhören von Mobilfunkgesprächen genutzt werden und stellen auch ein Sicherheitsrisiko für die internen SS7-Signalisierungsnetze der Mobilfunkanbieter dar.

Die Mobile Application Part (MAP) ist ein SS7-Protokoll, das eine Anwendungsschicht bereitstellt für die verschiedenen Knoten in GSM- und UMTS-Mobil-Core-Netzen und GPRS-Core-Netzwerken, um miteinander zu kommunizieren, um Dienstleistungen für Mobile-Nutzer liefern zu können. Die Mobile Application Part ist die Anwendungsschicht, die verwendet wird, um auf das Home Location Register (HLR), Visitor Location Register (VLR), Mobile Switching Center (MSC), Equipment Identity Register (EIR), Authentication Centre (AuC), Short Message Service Center (SMSC) und Serving GPRS Support Node (SGSN) zugreifen zu können.

Die wesentlichen Einrichtungen, die von MAP vorgesehen sind:
Mobility Services: Standort-Management (um Roaming zu unterstützen), Authentifizierung, Verwaltung Abonnementinformationen von Diensten, Fehlerbeseitigung.

Betrieb und Wartung: Mobilfunkteilnehmer-Rückverfolgung, das Abrufen einer Mobilfunkteilnehmer IMSI.
Anrufverwaltung: Routing, die Bearbeitung von Anrufen beim Roaming, prüfen, ob ein Mobilfunkteilnehmer zur Verfügung steht, um Anrufe zu empfangen.
Zusatzdienste.
Short Message Service.
Paketdatenprotokoll (PDP) Dienstleistungen für GPRS:
Bereitstellung von Routing-Informationen für GPRS-Verbindungen.
Location Service Management Services: Erlangen der Lage der Mobilfunkteilnehmer.

Die Mobile Application Part Spezifikationen, die ursprünglich von der GSM Association definiert wurden, werden jetzt von ETSI / 3GPP gesteuert. MAP wird durch zwei verschiedene Standards definiert, in Abhängigkeit von der mobilen Netzwerktyp:
MAP für GSM (vor Release 4) durch 3GPP TS 09.02 spezifiziert MAP für UMTS ("3G") und GSM (Release 99 oder höher) wird von 3GPP TS 29.002 spezifiziert

In Mobilfunknetzen auf Basis von ANSI-Standards (derzeit CDMA2000, in den letzten AMPS, IS-136 und cdmaOne) spielt die Rolle von MAP ein ähnliches Protokoll, in der Regel als IS-41 oder ANSI-41 (ANSI MAP) bezeichnet. Seit dem Jahr 2000 wird es von 3GPP2 als N.S0005 gepflegt und seit 2004 heißt 3GPP2 X.S0004.

MAP ist ein Transaction Capabilities Application Part (TCAP) Nutzer, und als solches kann es mit "traditionellen" SS7-Protokollen oder über IP transportiert werden mit Transport unabhängigem Signalling Connection Control Part (TI-SCCP), oder mit SIGTRAN.

In Mobilfunktelefonnetzen wie GSM und UMTS wird die SS7-Anwendung MAP verwendet. Sprachverbindungen sind Circuit Switched (CS) und Datenverbindungen sind Packet Switched (PS) Anwendungen. Das mobile Endgerät wird als ME bezeichnet. SCF steht für die Service Control Function.

Einige der GSM / UMTS Circuit Switched Schnittstellen in der Mobilvermittlungsstelle (MSC), die über SS7 transportiert werden, umfassen die folgenden:
B -> VLR (verwendet MAP / B). Die meisten MSCs sind einem Besucherregister (VLR) zugeordnet, so dass die B-Schnittstelle "intern" ist.
C -> HLR (verwendet MAP / C) die Mitteilungen zwischen MSC ans HLR werden von C-Schnittstelle abgewickelt
D -> HLR (verwendet MAP / D) zur Verbindung mit dem CS-Netzwerk und für Standort-Updates
E -> MSC (verwendet MAP / E) für inter-MSC-Übergaben
F -> EIR (verwendet MAP / F) für Geräte-Identitätsprüfungen
H -> SMSC (verwendet MAP / H) für Short Message Service (SMS) über CS
I -> ME (verwendet MAP / I) Mitteilungen zwischen MSC zu ME die von der I-Schnittstelle abgewickelt werden.
J -> SCF (verwendet MAP / J) Mitteilungen zwischen HLR zu gsmSCF werden von der J-Schnittstelle abgewickelt.

Es gibt auch mehrere GSM / UMTS PS Schnittstellen im Serving GPRS Support Node (SGSN),die über SS7 transportiert werden:
Gr -> HLR zur Verbindung des PS-Netzwerks und der Standortaktualisierung
Gd -> SMS-C für SMS über PS
Gs -> MSC für kombinierte CS + PS Signalisierung über PS
Ge -> Die Gebühren für Kundenspezifische Anwendungen für Verbesserte Logik im Mobilfunknetze (CAMEL/ Customised Applications for Mobile networks Enhanced Logic) Prepaid-Aufladung
Gf -> EIR für die Geräte-Identitätsprüfung

Aus den Druckschriften US 2005/ 0232 236 A1, US 2001 /0046856 A1, US 6, 889, 328 B1, US 2013/0095793 A1 und US 2010/0105355 A1, US 2011/014939 A1, WO 2014/187969 A1, US 2011/041176 A1, US 5 345 595 A sind Verfahren bekannt zum Schutz von Netzwerken. Die aufgeführten Funktionen haben keinen Anspruch auf Vollständigkeit sondern sollen lediglich die Funktionalität beschreiben, auf die im Folgenden eingegangen wird.

Aufgrund der Vielzahl von Komponenten, von unterschiedlichen Netzwerkbetreibern und auch Herstellern, kann es zu Angriffen auf die Netzwerkinfrastruktur der Mobilfunkanbieter kommen.

### Übersicht über die Erfindung:

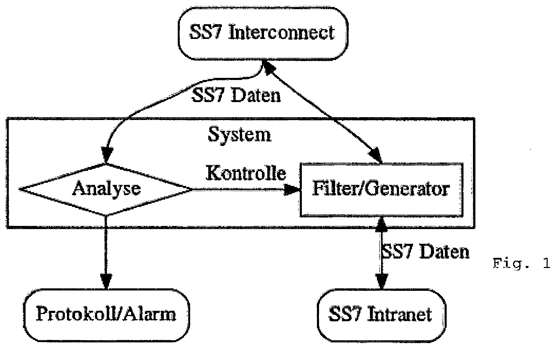

Die vorliegende Erfindung beschreibt ein Schutzsystem, welches durch die Kombination mehrerer Verfahren die SS7-Netzwerkzugänge von Telekommunikationsanbietern vor SS7/MAP-Angriffen schützt, in dem es solche erkennt und filtert. (Figur 1) Die Eigenschaften der vorliegenden Erfindung werden durch die beigefügten Ansprüche bestimmt.

Insbesondere betrifft die Erfindung ein Verfahren zur Sicherung einer Signalisierungssystem- Nr. 7 -Schnittstelle, SS7 Schnittstelle, eines Systems, über die ein Zugang zu einem lokalen Mobilfunknetz erfolgt, gegenüber einem externen System, umfassend einen oder mehrere der folgenden Analyse-Schritte:
a) Feststellung, ob eine SS7/MAP-MSU, Signalisierungssystem Nr. 7 Mobile Application Part Message Signal Unit, im Interconnect zwischen Mobilfunknetzen zulässige Adressen innerhalb einer Vielzahl von Protokollschichten verwendet, falls keine zulässigen Adressen vorliegen, erfolgt ein Zurückweisen der SS7/MAP-MSU, indem
   ein Bestimmen des Absender-Mobilfunknetzes O durch Analyse der Calling Party Address in der SCCP-Schicht erfolgt, wobei:
   Wenn der Numbering plan auf "ISDN/telephony numbering plan (ITU-T E.163 and E.164)" gesetzt ist, wird der Anfang der Adresse in einer Liste aller E.164-Netzbetreiberprefixe gesucht und so das Absender-Mobilfunknetz O bestimmt;
   Wenn der Numbering plan auf "land mobile numbering plan (ITU-T E.212)" gesetzt ist, wird der Anfang der Adresse in einer vordefinierten Liste aller E.212 Mobile Country Codes, MCC, und Mobile Network Codes, MNC gesucht und so das Absender-Mobilfunknetz O bestimmt;
   indem ein Bestimmen des Heimatmobilfunknetzes H erfolgt, wobei:
      Falls der Mobilfunkteilnehmer in einer Applikationsschicht über eine IMSI adressiert wird, wird der Anfang der IMSI in einer vordefinierten Tabelle aller E.212 Mobile Country Codes, MCC, und Mobile Network Codes, MNC gesucht und so das Heimatmobilfunknetz H bestimmt;
      falls der Mobilfunkteilnehmer in einer Applikationsschicht über eine MSISDN adressiert wird, wird der Anfang der MSISDN in der Liste der von der ITU zugeteilten Telefonie-Country-Codes gesucht und so das Heimatmobilfunknetz H bestimmt;
      falls die Mobilfunknetze O und H nicht identisch sind, handelt es sich um keine legitime Anfrage und wenn O und H identisch sind handelt es sich wahrscheinlich um eine legitime Anfrage;
b) Feststellen, ob ein Mobilfunkteilnehmer im Interconnect zwischen Mobilfunknetzen von einem Mobilfunknetz R als präsent in diesem Mobilfunknetz R signalisiert wird, obwohl er in einem anderen Mobilfunknetz präsent ist, falls dies der Fall ist, wird eine Anfrage an die SS7 Schnittstelle zurückgewiesen, indem wenn ein Mobilfunknetz dem Home Location Register, HLR, des Heimatmobilfunknetzes eines Mobilfunkteilnehmers mittels "sendAuthenticationInfo"- und/oder "updateLocation"-Anfrage signalisiert hat, dass dieser Mobilfunkteilnehmer jetzt in dem anfragenden Mobilfunknetz präsent ist, wird mittels einer "provideSubscriberInfo"-Anfrage an das VLR V, Visitor Location Register, bei dem der Mobilfunkteilnehmer zuletzt präsent war, festgestellt, ob dieser dort immer noch präsent ist, und falls dies der Fall ist, wird die Anfrage verworfen und/oder
   ob die unter Berücksichtigung einer statischen Tabelle ermittelte Reisezeit, gemessen vom letzten Kontakt zum VLR V, für eine Reise in das Land, in dem sich Mobilfunknetz R befindet, reichen würde, falls dies nicht der Fall ist, wird die Anfrage verworfen;
c) Feststellen, ob eine SS7/MAP-MSU im Interconnect zwischen Mobilfunknetzen zum Zwecke des Auffindens eines Mobilfunkteilnehmers massenhaft an verschiedene Netzelemente eines Mobilfunknetzes gesendet wurde, falls diese der Fall ist, erfolgt ein Zurückweisen der SS7/MAP-MSU;
d) Feststellen, ob eine missbräuchlichen Veränderung von Mobilfunkteilnehmerdaten durch Fälschen einer Absender-Adresse von SS7/MAP-MSUs im Interconnect zwischen Mobilfunknetzen vorliegt, falls diese der Fall ist, erfolgt ein Zurückweisen der SS7/MAP-MSU, wobei ein von einem HLR H eingehendes TC-BEGIN mit einem invoke für insertSubscriberData/deleteSubscriberData registriert und als Anfrage gepuffert wird, dem HLR H wird mit TC-Continue und einer zufälligen otid, origination transaction id, der Erfolg der insertSubscriberData/deleteSubscriberData-Anfrage mitgeteilt, sollte kein TC-END von dem HLR-H geschickt werden, handelt es sich wahrscheinlich um keine legitime Anfrage, sollte ein TC-END von dem HLR-H kommen wird die Anfrage, die gepuffert wurde, zu einem VLR V weitergeleitet.

In einer weiteren möglichen Ausführungsform wird im og. Schritt a) die SS7/MAP-MSUs, die eine Anfrage an ein VLR (Visitor Location Register), MSC (Mobile Switching Center) oder SGSN (Serving GPRS Support Node) enthalten, untersucht.

In einer weiteren möglichen Ausführungsform wird im og. Schritt a) eine Überprüfung der Art der Adresse, vorzugsweise der SCCP Calling Address, eines Absenders in der Transportschicht, auf eine oder mehrere der folgenden Merkmale durchgeführt:
a. Enthält die Adresse keinen Global Title oder keinen Numbering Plan oder kein Encoding Scheme oder keinen Nature of Address Indicator, handelt es sich wahrscheinlich um keine legitime Anfrage;
b. Wenn das Encoding-Scheme-Feld nicht auf nicht BCD, Binary-coded decimal, gesetzt ist, handelt es sich wahrscheinlich um keine legitime Anfrage
c. Wenn das Nature-of-Address-Feld nicht auf "international number" gesetzt ist, handelt es sich wahrscheinlich um keine legitime Anfrage
d. Wenn das Numbering-Plan-Feld weder "ISDN/telephony numbering plan (ITU-T E.163 & E.164)" noch "land mobile numbering plan (ITU-T E.212)" ist, handelt es sich wahrscheinlich um keine legitime Anfrage

In einer weiteren möglichen Ausführungsform wird im og. Schritt a) des Anspruchs 1 eine Bestimmung des absendenden Mobilfunknetzes anhand eines Absenders, vorzugsweise der SCCP Calling Address, in der Transportschicht vorgenommen, wobei vorzugsweise ein oder mehrere der folgenden Schritte ausgeführt werden:
e. Wenn der Numbering plan auf "ISDN/telephony numbering plan (ITU-T E.163 and E.164)" gesetzt ist:
   i.Anfang des Global Titles in der Liste der von
      der ITU zugeteilten Telefonie-Country-Codes suchen, um das Land des Mobilfunknetzes zu bestimmen;
   ii.Der nachfolgende Teil des Global Titles
      sollte in einer Liste der Network Codes aller PLMNs, Public Land Mobile Networks, des jeweiligen Landes gesucht werden, so dass ein Mobilfunknetz, O, bestimmt wird,
f. Wenn der Numbering plan "land mobile numbering plan (ITU-T E.212)" ist:
   i. Anfang des Global Titles in der Liste der Mobile Country Codes, MCC, und Mobile Network Codes, MNC, der ITU suchen, so dass ein Mobilfunknetz O bestimmt wird; und Bestimmung eines Heimat-Mobilfunktnetz H eines Mobilfunkteilnehmers T, vorzugsweise durch Ausführen eines oder mehrerer der folgenden Schritte:
g. Falls der Mobilfunkteilnehmer in einer Applikationsschicht über eine IMSI adressiert wird: Die ersten Ziffern der IMSI enthalten ebenfalls den MCC und MNC; der Anfang der IMSI wird in der Liste der Mobile Country Codes, MMC, und Mobile Network Codes, MNC, der ITU gesucht, um so das Heimatmobilfunknetz H zu bestimmen;
h. Falls der Mobilfunkteilnehmer in der Applikationsschicht über die MSISDN adressiert wird, so wird der Anfang der MSISDN in der Liste der von der ITU zugeteilten Telefonie-Country-Codes gesucht, so dass das Land des Mobilfunknetzes bestimmt wird, wobei vorzugsweise über eine vordefinierte Tabelle eine Netzbetreibergruppe H₁...Hₙ bestimmt werden kann
und falls die Mobilfunknetze O und H nicht identisch sind, handelt es sich um keine legitime Anfrage und wenn O und H identisch ist oder ist O in H₁...Hₙ, handelt es sich wahrscheinlich um eine legitime Anfrage.

In einer weiteren, möglichen Ausführungsform wird im og. Schritt b) des Anspruchs 1 erkannt, wenn ein Mobilfunknetz dem Home Location Register, HLR, des Heimatmobilfunknetzes eines Mobilfunkteilnehmers mittels "sendAuthenticationInfo"- und/oder "updateLocation"-Anfrage signalisiert hat, dass dieser Mobilfunkteilnehmer jetzt in dem anfragenden Mobilfunknetz präsent sei, obwohl er immer noch in dem vorherigen Mobilfunknetz präsent ist. Dazu wird mittels einer "provideSubscriberInfo"-Anfrage an das VLR, Visitor Location Register, bei dem der Mobilfunkteilnehmer zuletzt präsent war, festgestellt, ob dieser dort immer noch präsent ist, und falls dies der Fall ist, wird die Anfrage verworfen. Dabei werden folgende Schritte durchgeführt, um festzustellen, ob der Mobilfunkteilnehmer noch präsent ist:
"sendAuthenticationInfo"- und/oder "updateLocation"-Anfrage von Mobilfunknetz R betreffend Mobilfunkteilnehmer T wird an das HLR H des Heimatmobilfunknetzes gesendet;
- die Anfrage wird aufgehalten falls sie nicht vom aktuellem VLR V stammt (das VLR V bezeichnet, das VLR in dem der Mobilfunkteilnehmer aktuell eingebucht ist, im Gegensatz zum allgemeinen VLR);
- das HLR H wird nach der Adresse des zuletzt für Mobilfunkteilnehmer T zuständigen VLR V gefragt;
- eine "provideSubscriberInfo"- Anfrage mit der IMSI des Mobilfunkteilnehmers T wird an das VLR V gesendet, dabei wird das Feld "currentLocation" gesetzt;
- das VLR V löst einen PagingRequest zum Mobilfunkendgerät des Mobilfunkteilnehmers T aus, da die "currentLocation" angefordert wurde;
- Falls der Mobilfunkteilnehmer T auf den PagingRequest antwortet, setzt das VLR V in seiner Antwort das "currentLocationRetrieved"-Feld; in diesem Fall ist die ursprüngliche Anfrage des Mobilfunknetzes R offensichtlich fehlerhaft und wird zurückgewiesen;
falls der Mobilfunkteilnehmer T auf den PagingRequest nicht antwortet, setzt das VLR V in seiner Antwort nicht das "currentLocationRetrieved"-Feld.

In einer weiteren, möglichen Ausführungsform werden im og. Schritt b) folgende Schritte durchgeführt, um die Plausibilität der ursprünglichen Anfrage weiter zu prüfen: die vom HLR H angefragten Informationen werden umgehend an das entfernte VLR R weitergeleitet, wobei durch Auswertung des "ageOfLocationInformation"-Feldes:
i. Ermitteln, wie lange es her ist, dass der Mobilfunkteilnehmer T zuletzt Kontakt zum VLR V hatte, "ageOfLocationInformation";
j. Ermitteln wie lange würde im günstigsten Falle eine Reise von dem Land, in dem sich geografisch VLR V befindet zu dem Land, in dem sich geografisch Mobilfunknetz R befindet, dauern, wobei für die Ermittlung ungefähre Werte, die statisch in einer Tabelle hinterlegt sein können, ausreichen würden,
k. Falls die Zeit, die seit dem letzten Kontakt von Mobilfunkteilnehmer T zum VLR V vergangen ist, geringer ist, als die günstigstenfalls nötige Reisezeit, ist die ursprüngliche Anfrage des Mobilfunknetzes R offensichtlich fehlerhaft und wird zurückgewiesen; ist dies nicht der Fall, ist die ursprüngliche Anfrage des Mobilfunknetzes R wahrscheinlich berechtigt und wird weitergeleitet zum HLR H.

In einer weiteren, möglichen Ausführungsform wird im og. Schritt c), anhand von **SS7/MAP-MSU** pro Zeiteinheit entschieden, ob eine Anfrage zulässig ist oder verworfen wird, wobei vorzugsweise Abgleichgruppen, Operationsgruppen und Quellgruppen zu definieren sind, wobei bei einer eingehenden **SS7/MAP-MSU** zuerst die zutreffende Abgleichgruppe bestimmt wird, dann wird die SS7/MAP Operation einer Operationsgruppe zugeschrieben, dann werden eine oder mehrere Quellgruppen bestimmt, um dann einen Zähler für das Tupel aus Quell-, Operations- und Abgleichgruppe zu erhöhen, und dann, falls der Zähler in einem bestimmten Zeitraum zu schnell gestiegen ist, zu entscheiden, ob die **SS7/MAP-MSU verworfen wird.**

In einer weiteren, möglichen Ausführungsform wird im og. Schritt c) festgestellt, ob Anfragen bzgl. eines Mobilfunkteilnehmers massenhaft an verschiedene VLR, Visitor Location Register, MSC ,Mobile Switching, Center, oder SGSN, Serving GPRS Support Node, gesendet werden, indem der Zeitpunkt jeder Anfrage und die IMSI des Mobilfunkteilnehmers, oder eine davon abgeleitete eindeutige Identität, und der Global Title eines Empfängers für eine definierte Zeitspanne in einer Tabelle gespeichert werden. Übersteigt dabei die Anzahl der verschiedenen Empfänger-Global-Title für eine IMSI, oder eine davon abgeleitete eindeutige Identität, eine definierte Grenze, handelt es sich um massenhafte Abfragen zum Auffinden des betroffenen Mobilfunkteilnehmers im Mobilfunknetz.

In einer weiteren, möglichen Ausführungsform wird im og. Schritt d) ein eingehender TC-BEGIN von einem HLR H mit einem invoke für insertSubscriberData/deleteSubscriberData registriert und gepuffert. Dem HLR H wird mit TC-Continue und vorzugsweise zufälliger otid, origination transaction id, der Erfolg des Aufrufs mitgeteilt. Sollte kein TC-END vom Aufrufer/HLR H geschickt werden, handelt es sich wahrscheinlich um keine legitime Anfrage. Sollte ein TC-END von dem ursprünglichen Aufrufer kommen wird die gepufferte Anfrage zum eigentlichen VLR V weitergeleitet.

In einer weiteren möglichen Ausführungsform wird im og. Schritt e) ein Absender- und Empfänger-Global-Title jeder SS7/MAP-MSU mit einer Liste W, whitelist, verglichen, die intern gehalten wird und konfigurierbar ist. Ist der Absender- oder Empfänger-Global-Title in der Liste nicht zu finden, handelt es sich nicht um eine legitime Anfrage;
und/oder
der Absender- und Empfänger-Global-Title jeder MSU wird mit einer Liste B, Blacklist, verglichen, die intern gehalten wird und konfigurierbar ist. Ist der Absender- oder Empfänger-Global-Title in der Liste zu finden, handelt es sich nicht um eine legitime Anfrage;
und/oder
der Absender- und Empfänger-Global-Title jeder MSU wird mit einer Liste aller in allen GSMA IR.21-Dokumenten der Roaming-Mobilfunknetze eines Mobilfunktes gelisteten Global Title verglichen. Ist der Absender- oder Empfänger-Global-Title in der Liste nicht zu finden, handelt es sich wahrscheinlich nicht um eine legitime Anfrage.

Ein weiterer Teil der Erfindung ist ein Verfahren um MTP/SCCP aus M2PA-, M2UA-, M3UA- und SUA-Paketen einer SCTP-Verbindung transparent zu extrahieren, mit einem System B das zwischen zwei oder mehr STPs/Gateways angeordnet ist, wobei ein STP/Gateway A eine IP/SCTP Verbindung zu System B aufbaut. Als Resultat baut System B eine Verbindung zu einem STP/Gateway C auf, wobei die Protokoll-Implementierung zwischen den STP/Gateways A und C stattfindet. Datenpakete zwischen A und C werden durch System B analysiert, die jeweilige User-Adaption bestimmt und die MTP/SCCP-Payload extrahiert.

Ein weiter Teil der Erfindung ist ein System, gekennzeichnet durch eine Einrichtung und Konfiguration, die einen Ablauf des erfundenen Verfahrens erlaubt.
Grundsätzlich ist zu beachten, dass dieses System ein herkömmlicher Server mit entsprechenden Komponenten wie Festplatte, Arbeitsspeicher, Prozessoren sein kann, auf dem ein bekanntes Betriebssystem läuft, wie zum Beispiel Unix oder Unix-Varianten (Linux, FreeBSD) bzw. Windows. Durch diese Systeme ist es möglich, eine entsprechende Programmierung der Schnittstellen durchzuführen, um eine Art Brandwand/Firewall bereitzustellen, die unerlaubte Datenströme abfängt und Anomalien erkennt. Über entsprechende Schnittstellen wird der Datenstrom aufgenommen, analysiert, gegebenenfalls modifiziert oder zurückgewiesen, um ihn dann, falls er zulässig ist, weiterzuleiten. Dies erfolgt vollständig transparent für die meisten Teilnehmer.

Zur Vereinfachung der Situationsbeschreibung wird im Folgenden der Begriff "Mobilfunkteilnehmer" mit der Kombination "Mobilfunkendgerät eines Mobilfunkteilnehmers mit dessen SIM-Karte" gleichgesetzt: alle beschriebenen Verfahren identifizieren den Mobilfunkteilnehmer über das Identifikationsmerkmal der SIM-Karte, nicht aber über spezifische Informationen des Mobilfunkendgerätes.

### Figurenbeschreibung:

Figur 1 zeigt ein Verfahren für ein Schutzsystem, bei dem an einer externen SS7-Schnittstelle, dem SS7-Interconnect, die Verbindung über das weltweite SS7-Netz zu anderen Telekommunikationsanbietern erfolgt.
Figur 2 zeigt ein Verfahren, welches prüft, ob eine SS7/MAP-MSU (Message Signal Unit) gemäß ITU-T Q.703 im Interconnect zwischen Mobilfunknetzen zulässig adressiert ist.
Figuren 3 und 6 zeigen ein Verfahren bei dem überprüft wird, ob ein Mobilfunkteilnehmer T im Interconnect zwischen Mobilfunknetzen von einem Mobilfunknetz R als präsent in diesem Mobilfunknetz R signalisiert wird, obwohl er in einem anderen Mobilfunknetz V präsent ist.
Figur 4 zeigt ein Verfahren bei dem überprüft wird, wieviel Zeit letzten Kontakt von Mobilfunkteilnehmer T zum VLR V vergangen ist;
Figur 5 zeigt den Fall an, dass ein sendAuthenticationInfo nicht vom aktuellen VLR geschickt wurde und es zu keinem updateLocation-Versuch kam, dann ist ein Incident zu melden.
Figur 7 Dieses Verfahren schützt ein VLR V vor illegitimen Änderungen durch ein HLR H mittels eines Systems S Figur 8 Verfahren E: Aufbau zum Empfangen und Bearbeiten von MSUs (Verfahren "read")
Figur 9 Verfahren C: Feststellen, ob eine SS7/MAP-MSU im Interconnect zwischen Mobilfunknetzen zum Zwecke des Auffindens eines Mobilfunkteilnehmers massenhaft an verschiedene Netzelemente eines Mobilfunknetzes gesendet wird (Verfahren "ratelimit") Figur. 10 ist ein Schichtenmodell
Figur. 11 ist ein Mitschnitt als Beispiel, das entsprechende SCCP Adressinformation mit einer legitimen Anfrage enthält.

### Beschreibung einer Ausführungsform:

Figur 1 zeigt ein Schutzsystem, bei dem an einer externen SS7-Schnittstelle, dem SS7-Interconnect, die Verbindung über das weltweite SS7-Netz zu anderen Telekommunikationsanbietern erfolgt. Ankommende SS7/MAP Daten werden nach den unten beschriebenen Verfahren analysiert. Nicht legitime Anfragen werden durch einen Filter in Richtung des SS7-Intranets verworfen und nach außen je nach Verfahren nicht oder mittels einer generierten Antwort beantwortet. Die Ergebnisse der Analyse-Verfahren werden protokolliert. Das System kann auf Wunsch andere Systeme über entsprechende Angriffe alarmieren. Wahlweise kann das System auch so eingesetzt werden, dass es nicht als Filtersystem gegenüber dem SS7-Intranet des Telekonununikationsanbieters fungiert, sondern nicht-legitime Anfragen lediglich erkennt und protokolliert/alarmiert.

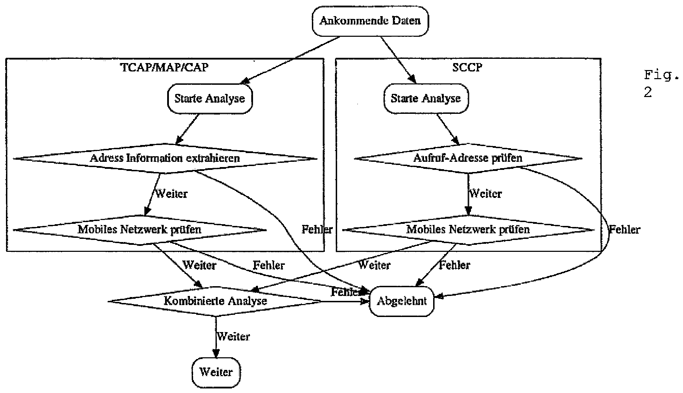

Verfahren A: Feststellung, ob eine SS7/MAP-MSU (Message Signal Unit) gemäß ITU-T Q.703 im Interconnect zwischen Mobilfunknetzen zulässig adressiert ist, insbesondere, ob die Absenderadresse und die Empfängeradresse zulässig sind. So sollte bei eingehenden SS7/MAP-MSUs die Absenderadresse und bei ausgehenden Nachrichten die Empfänger-Adresse von demselben Mobilfunknetz stammen, zu dem auch der Mobilfunkteilnehmer gehört, den die MSU betrifft (siehe hierzu Figur 2).

Um festzustellen, ob eine Anfrage bzgl. eines Mobilfunkteilnehmers, die an ein VLR (Visitor Location Register), MSC (Mobile Switching Center) oder SGSN (Serving GPRS Support Node) gerichtet ist, vom Heimatnetz des Mobilfunkteilnehmers stammt, sollten die Adressen in der jeweiligen SS7/MAP-MSU untersucht werden. In einer SS7/MAP-MSU können in verschiedenen Protokollschichten Adressinformationen eingefügt werden. Es bedarf eines Abgleichs der Adressinformationen in den verschiedenen Protokollschichten.

Beim Routing von MSUs zwischen Mobilfunknetzen werden verschiedene Typen von Adressen genutzt. Ein einfacher Vergleich der Adressen ist daher nicht ausreichend. Für jeden Typ von Adresse wird eine spezielle Funktion/Abbildung benötigt, um die Adresse dem jeweiligen Mobilfunknetzwerk zuordnen zu können:
- Eine den Mobilfunkteilnehmer T betreffende Anfrage wird via Interconnect an ein VLR oder ein MSC oder eine SGSN V im zu beobachtenden Mobilfunknetz gesendet
- Überprüfung der Art der Adresse des Absenders in der Transportschicht (SCCP Calling Address) auf folgende Merkmale (Format gemäß ITU-T Q.713):
   - Enthält die Adresse keinen Global Title oder keinen Numbering Plan oder kein Encoding Scheme oder keinen Nature of Address Indicator handelt es sich wahrscheinlich um keine legitime Anfrage
   - Wenn das Encoding-Scheme-Feld nicht auf BCD (Binary-coded decimal) gesetzt ist, handelt es sich wahrscheinlich um keine legitime Anfrage
   - Wenn das Nature-of-Address-Feld nicht auf "international number" gesetzt ist, handelt es sich wahrscheinlich um keine legitime Anfrage
   - Wenn das Numbering-Plan-Feld weder auf "ISDN/telephony numbering plan (ITU-T E.163 & E.164)" noch "land mobile numbering plan (ITU-T E.212)" gesetzt ist, handelt es sich wahrscheinlich um keine legitime Anfrage
- Bestimmung des absendenden Mobilfunknetzes anhand des Absenders in der Transportschicht (SCCP Calling Address):
   - Wenn der Numbering plan auf "ISDN/telephony numbering plan (ITU-T E.163 and E.164)" gesetzt ist:
      - Anfang des Global Titles in der Liste der von der ITU zugeteilten Telefonie-Country-Codes suchen. So wird das Land des Mobilfunknetzes bestimmt.
      - Der nachfolgende Teil des Global Titles muß in einer Liste der Network Codes aller PLMNs (Public Land Mobile Networks) des jeweiligen Landes gesucht werden. So wird der Mobilfunknetzbetreiber O bestimmt
   - Wenn der Numbering plan "land mobile numbering plan (ITU-T E.212)" ist:
      - Anfang des Global Titles in der Liste der Mobile Country Codes (MCC) und Mobile Network Codes (MNC) der ITU suchen. So wird der Mobilfunknetzbetreiber O bestimmt.
- Bestimmung des Heimatnetzbetreibers H des Mobilfunkteilnehmers T:
   - Falls der Mobilfunkteilnehmer T in der Applikationsschicht über die IMSI adressiert wird: Die ersten Ziffern der IMSI enthalten ebenfalls den MCC und MNC. Der Anfang der IMSI wird in der Liste der Mobile Country Codes (MCC) und Mobile Network Codes (MNC) der ITU gesucht. So wird der Heimatnetzbetreiber H bestimmt.
   - Falls der Mobilfunkteilnehmer T in der Applikationsschicht über die MSISDN adressiert wird: Anfang der MSISDN in der Liste der von der ITU zugeteilten Telefonie-Country-Codes suchen. So wird das Land des Mobilfunknetzes bestimmt. Über eine vordefinierte Tabelle kann so eine Netzbetreibergruppe H₁...Hₙ bestimmt werden, um wenigstens angenähert entscheiden zu können, ob der Mobilfunknetzbetreiber O in dieser Netzbetreibergruppe ist.
- Sind O und H nicht identisch sind, handelt es sich um keine legitime Anfrage
- Sind O und H identisch bzw. ist O in H₁...Hₙ, handelt es sich wahrscheinlich um eine legitime Anfrage. Um zu verhindern, dass der Absender gefälscht wird, in Fällen, wo keine Antwort benötigt wird, kann das Verfahren D (siehe unten) eingesetzt werden

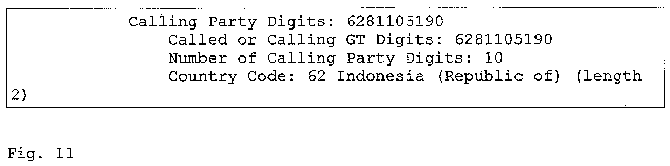

Figur 11 beschreibt eine entsprechende SCCP Adressinformation, die die oben genannten Parameter so enthält, dass die Anfrage legitim ist.

Verfahren B: Überprüfen, ob ein Mobilfunkteilnehmer T im Interconnect zwischen Mobilfunknetzen von einem Mobilfunknetz R als präsent in diesem Mobilfunknetz R signalisiert wird, obwohl er in einem anderen Mobilfunknetz V präsent ist (Verfahren "intercept")

Wenn ein Mobilfunknetz R dem HLR (Home Location Register) des Heimatmobilfunknetzes eines Mobilfunkteilnehmers T mittels "sendAuthenticationInfo"- und/oder "updateLocation"-Anfrage signalisiert, dass dieser Mobilfunkteilnehmer T jetzt in dem anfragenden Mobilfunknetz R präsent ist, kann mittels einer "provideSubscriberInfo"-Anfrage an das VLR (Visitor Location

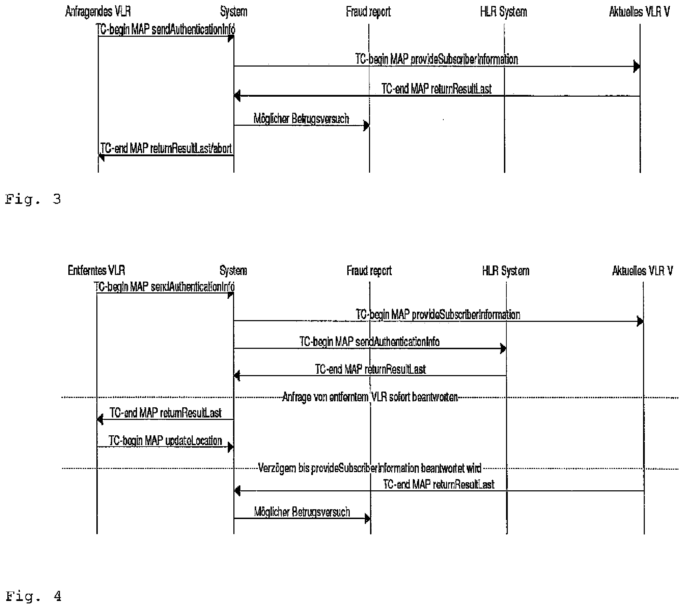

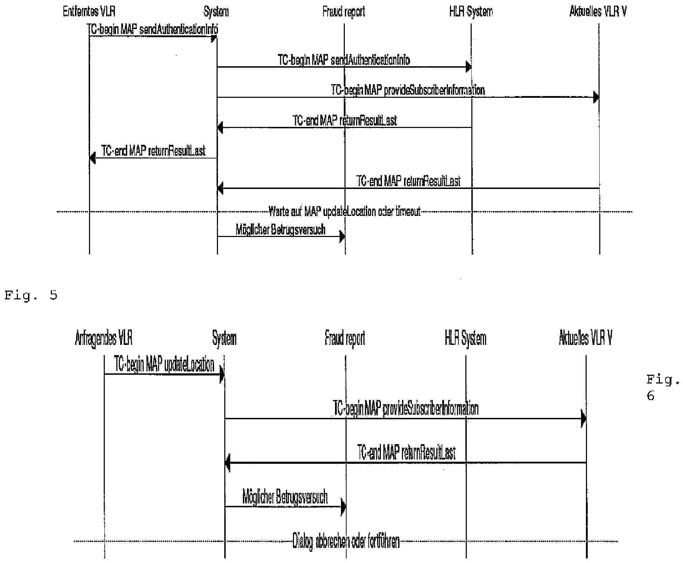

Register) V, bei dem der Mobilfunkteilnehmer T zuletzt präsent war, festgestellt werden, ob dieser dort immer noch präsent ist:
- "sendAuthenticationInfo"- und/oder "updateLocation"-Anfrage von Mobilfunknetz R betreffend Mobilfunkteilnehmer T wird an das HLR H des Heimatmobilfunknetzes gesendet.
- Die Anfrage wird aufgehalten, falls sie nicht vom aktuellem VLR V stammt.
- Das HLR H wird nach der Adresse des zuletzt für Mobilfunkteilnehmer T zuständigen VLR V gefragt
- Eine "provideSubscriberInfo"-Anfrage mit der IMSI des Mobilfunkteilnehmers T wird an das VLR V gesendet. Dabei wird das Feld "currentLocation" gesetzt
- Das VLR V löst einen PagingRequest zum Mobilfunkteilnehmer T aus, da die "currentLocation" angefordert wurde
- Falls der Mobilfunkteilnehmer T auf den PagingRequest antwortet, setzt das VLR V in seiner Antwort das "currentLocationRetrieved"-Feld. In diesem Fall ist die ursprüngliche Anfrage des Mobilfunknetzes R offensichtlich fehlerhaft und wird zurückgewiesen
- Die Figuren 3 und 6 stellen das eben beschriebene Verfahren für sendAuthenticationInfo bzw. updateLocation dar
- Falls der Mobilfunkteilnehmer T auf den PagingRequest nicht antwortet, setzt das VLR V in seiner Antwort nicht das "currentLocationRetrieved"-Feld. Dies dauert im Regelfall länger, als ein Timeout zulässt, um auf die sendAuthentication-Anfrage zu antworten. Deshalb sendet das System umgehend die vom HLR H angefragten Informationen an das entfernte VLR R weiter. Um die Plausibilität der ursprünglichen Anfrage weiter zu prüfen, kann das "ageOfLocationInformation"-Feld der Antwort des VLR V ausgewertet werden:
   - Wie lange ist es her, dass der Mobilfunkteilnehmer T zuletzt Kontakt zum VLR V hatte ("ageOfLocationInformation");
   - Wie lange würde im günstigsten Falle eine Reise von dem Land, in dem sich geografisch VLR V, befindet zu dem Land, in dem sich geografisch Mobilfunknetz R befindet, dauern? Für die Ermittlung reichen ungefähre Werte, die statisch in einer Tabelle hinterlegt sein können;
   - Falls die Zeit, die seit dem letzten Kontakt von Mobilfunkteilnehmer T zum VLR V vergangen ist, geringer ist, als die günstigstenfalls nötige Reisezeit, ist die ursprüngliche Anfrage des Mobilfunknetzes R offensichtlich fehlerhaft und wird zurückgewiesen. Ist dies nicht der Fall, ist die ursprüngliche Anfrage des Mobilfunknetzes R wahrscheinlich berechtigt und wird weitergeleitet zum HLR H;
- Das eben beschriebene Verfahren wird in Figur 4 eingesetzt: ein in diesem Zusammenhang erhaltenes updateLocation vom VLR R wird vom System so lange zurückgehalten, bis durch das oben genannte Verfahren entschieden ist, ob die Anfrage von VLR R berechtigt ist. Wenn ja, wird sie zum HLR H weitergeleitet, wenn nein, verworfen und ein Angriff alarmiert. Falls sendAuthenticationInfo nicht vom aktuellem VLR geschickt wurde und es zu keinem updateLocation-Versuch kam, ist ein Incident zu melden: ein neues VLR (d.h. ein VLR, in dem sich der Mobilfunkteilnehmer neu einbucht) muss nach einem sendAuthenticationInfo immer ein updateLocation schicken. Figur 5 verdeutlicht diesen Fall, wobei dieses Schaubild auch den Fall darstellt, dass das aktuelle VLR R eine positive Antwort sendet (d.h. der Mobilfunkteilnehmer T ist noch beim VLR R angemeldet) oder das ageOfLocationInformation-Feld nach den oben dargestellten Auswertungen die Annahme zulässt, dass der Mobilfunkteilnehmer nicht realistisch beim entfernten VLR eingebucht sein kann.

Verfahren C: Feststellen, ob eine SS7/MAP-MSU im Interconnect zwischen Mobilfunknetzen zum Zwecke des Auffindens eines Mobilfunkteilnehmers massenhaft an verschiedene Netzelemente eines Mobilfunknetzes gesendet wird (Verfahren "ratelimit")

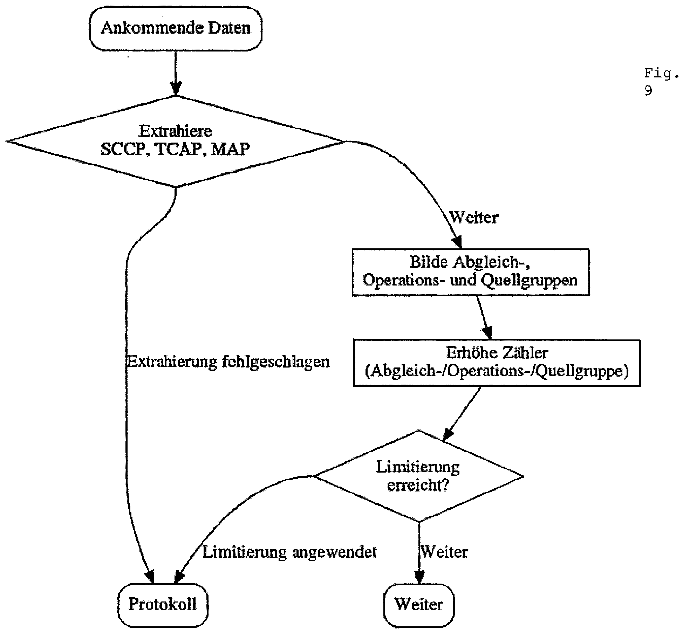

In einer allgemeinen Form
- Das im folgenden beschriebene Verfahren ist in Fig.9 dargestellt.
- Es ist möglich, Abgleichgruppen (Match), Operationsgruppen und Quellgruppen zu definieren
   - Eine Abgleichgruppe kann die Äquivalenz-Klasse der IMSIs oder weitere Subscriber-Kriterien sein
   - Eine Operationsgruppe ist eine oder mehrere SS7/MAP-Operationen
   - Eine Quellgruppe kann ein einzelner Global Title, ein Global-Title-Range oder eine Global-Title-Liste sein. Die Quellgruppe kann mit Sub-System-Numbers (SSN) kombiniert werden.
- Es ist möglich, Regeln entweder mit best-match oder all-match zu definieren.
- Als "Rate-Limit" werden Anfragen pro Tag, pro Stunde, pro Minute, pro Sekunde oder ähnliche Kriterein definiert.
Bei einer eingehenden **SS7/MAP-MSU** wird zuerst die zutreffende Abgleichgruppe bestimmt
- Dann werden eine oder mehrere Quellgruppen bestimmt.
- Zuerst wird der Zähler eines Tupels aus Quell-, Operations- und Abgleichgruppe erhöht und dann das "Rate-Limit" angewendet.
- Nach Anwendung des Rate-Limits kann eine **SS7/MAP-MSU** verworfen werden und/oder ein Log-Ereignis generiert werden

In einer spezielleren Ausführung wird, um festzustellen, ob Anfragen bzgl. eines Mobilfunkteilnehmers massenhaft an verschiedene VLR (Visitor Location Register), MSC (Mobile Switching Center) oder SGSN (Serving GPRS Support Node) gesendet werden, der Zeitpunkt jeder Anfrage und die IMSI des Mobilfunkteilnehmers (oder eine davon abgeleitete eindeutige Identität) und der Global Title des Empfängers für eine definierte Zeitspanne in einer Tabelle gespeichert. Übersteigt dabei die Anzahl der verschiedenen Empfänger-Global-Title für eine IMSI eine definierte Grenze, handelt es sich um massenhafte Abfragen zum Auffinden des betroffenen Mobilfunkteilnehmers im Mobilfunknetz:
- Eine den Mobilfunkteilnehmer T betreffende Anfrage wird via Interconnect an ein VLR oder ein MSC oder eine SGSN V im zu beobachtenden Mobilfunknetz gesendet
- Aus der Transportschicht der Anfrage wird die Empfänger-Adresse (SCCP Called Party Address) gespeichert
- Aus der Applikationsschicht der Anfrage wird die IMSI gespeichert
- Beide Daten werden zusammen mit der aktuellen Zeit in einer Datenbank gespeichert. Ist die Empfänger-Adresse für diese IMSI (oder eine davon abgeleitete eindeutige Identität) bereits gespeichert, wird der Eintrag überschrieben (es wird also nur der Zeitstempel aktualisiert).
- Alle Einträge, deren Zeitstempel älter sind als die definierte Zeitspanne zum Speichern der Einträge es zulässt, werden gelöscht
- Übersteigt die Anzahl der Einträge für diese IMSI eine vorher definierte Grenze, handelt es sich um massenhafte Abfragen zum Auffinden des des Mobilfunkteilnehmers T und die Anfrage kann verworfen werden und/oder ein Log-Ereignis generiert werden

Verfahren D: Verhindern der missbräuchlichen Veränderung von Mobilfunkteilnehmerdaten durch Fälschen der Absender-Adresse von SS7/MAP-MSUs im Interconnect zwischen Mobilfunknetzen (Verfahren "proxy")

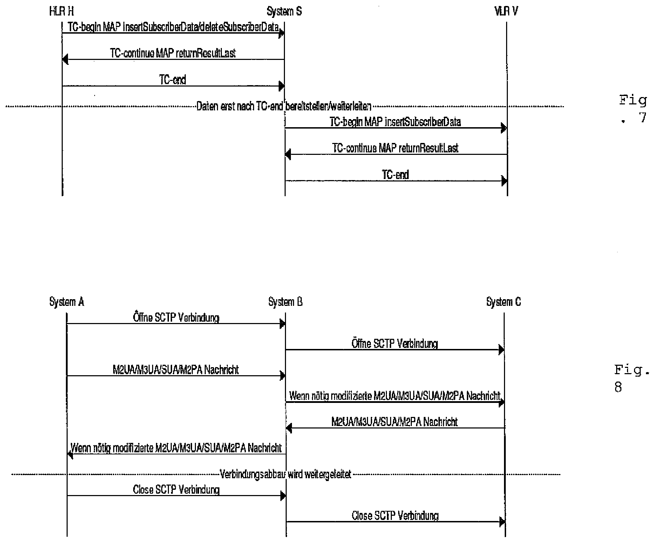

Dieses Verfahren schützt ein VLR V vor illegitimen Änderungen durch ein HLR H mittels eines Systems S und ist in Figur 7 dargestellt und wie folgt beschrieben:
Um die Operationen insertSubscriberData/deleteSubscriberData von einer falschen SCCP Calling Address zu unterbinden, wird ein aktives System S eingesetzt. Ein eingehendes TC-BEGIN von einem HLR H mit einem invoke für insertSubscriberData/deleteSubscriberData wird registriert und gepuffert. Dem HLR H wird mit TC-Continue (und zufälliger otid - origination transaction id) der Erfolg des Aufrufs mitgeteilt. Sollte kein TC-END vom Aufrufer geschickt werden, handelt es sich wahrscheinlich um keine legitime Anfrage. Sollte ein TC-END von dem ursprünglichen Aufrufer kommen, wird die gepufferte Anfrage zum eigentlichen VLR V weitergeleitet.

Ein weiteres mögliches Verfahren ist
Verfahren E: Überprüfung auf legitime Netz-Elemente eines Roaming-Partners.
- Der Absender- und Empfänger-Global-Title jeder SS7/MAP-MSU wird mit einer Liste W verglichen, die intern im System gehalten wird und konfigurierbar ist. Ist der Absender- oder Empfänger-Global-Title in der Liste nicht zu finden, handelt es sich nicht um eine legitime Anfrage ("Whitelist").
- Der Absender- und Empfänger-Global-Title jeder MSU wird mit einer Liste B verglichen, die intern im System gehalten wird und konfigurierbar ist. Ist der Absender- oder Empfänger-Global-Title in der Liste zu finden, handelt es sich nicht um eine legitime Anfrage ("Blacklist").
- Der Absender- und Empfänger-Global-Title jeder MSU wird mit einer Liste aller in allen GSMA IR.21-Dokumenten der Roaming-Partner eines Netzbetreibers gelisteten Global Title verglichen. Ist der Absender- oder Empfänger-Global-Title in der Liste nicht zu finden, handelt es sich höchstwahrscheinlich nicht um eine legitime Anfrage.

Verfahren F: Aufbau zum Empfangen und Bearbeiten von MSUs (Verfahren "read").

Es wird ein Verfahren beschrieben, um MTP/SCCP aus M2PA-, M2UA-, M3UA- und SUA-Paketen einer SCTP-Verbindung transparent zu extrahieren, ohne die jeweiligen Zustandsautomaten zu implementieren. Fig. 8 stellt dieses Verfahren in einem Sequenzdiagramm dar. Dazu wird das System (hier System B genannt) zwischen zwei oder mehr STPs/Gateways gestellt. Ein STP/Gateway A baut eine IP/SCTP Verbindung zu System B auf. Als Resultat baut System B eine Verbindung zu einem STP/Gateway C auf. Die Protokoll-Implementierung findet ausschließlich zwischen den STP/Gateways A und C statt. Datenpakete zwischen A und C werden analysiert, die jeweilige User-Adaption bestimmt, und die MTP/SCCP-Payload extrahiert. Diese kann von System B verarbeitet, analysiert und bewertet werden. Es ist möglich auf der Verbindung zwischen A und C Pakete einzuschleusen, eingehende Pakete zu modifizieren, oder zu verwerfen.

## Patentansprüche

1. Verfahren zur Sicherung einer Signalisierungssystem- Nr. 7 -Schnittstelle, SS7 Schnittstelle, eines Systems, über die ein Zugang zu einem lokalen Mobilfunknetz erfolgt, gegenüber einem externen System, umfassend einen oder mehrere der folgenden Analyse-Schritte:
a) Feststellung, ob eine SS7/MAP-MSU, Signalisierungssystem Nr. 7 Mobile Application Part Message Signal Unit, im Interconnect zwischen Mobilfunknetzen zulässige Adressen innerhalb einer Vielzahl von Protokollschichten verwendet, falls keine zulässigen Adressen vorliegen, erfolgt ein Zurückweisen der SS7/MAP-MSU,
indem
ein Bestimmen des Absender-Mobilfunknetzes O durch Analyse der Calling Party Address in der SCCP-Schicht erfolgt, wobei:
Wenn der Numbering plan auf "ISDN/telephony numbering plan (ITU-T E.163 and E.164)" gesetzt ist, wird der Anfang der Adresse in einer Liste aller E.164-Netzbetreiberprefixe gesucht und so das Absender-Mobilfunknetz O bestimmt;
Wenn der Numbering plan auf "land mobile numbering plan (ITU-T E.212)" gesetzt ist, wird der Anfang der Adresse in einer vordefinierten Liste aller E.212 Mobile Country Codes, MCC, und Mobile Network Codes, MNC gesucht und so das Absender-Mobilfunknetz O bestimmt;
indem ein Bestimmen des Heimatmobilfunknetzes H erfolgt, wobei:
Falls der Mobilfunkteilnehmer in einer Applikationsschicht über eine IMSI adressiert wird, wird der Anfang der IMSI in einer vordefinierten Tabelle aller E.212 Mobile Country Codes, MCC, und Mobile Network Codes, MNC gesucht und so das Heimatmobilfunknetz H bestimmt;
falls der Mobilfunkteilnehmer in einer Applikationsschicht über eine MSISDN adressiert wird, wird der Anfang der MSISDN in der Liste der von der ITU zugeteilten Telefonie-Country-Codes gesucht und so das Heimatmobilfunknetz H bestimmt;
falls die Mobilfunknetze O und H nicht identisch sind, handelt es sich um keine legitime Anfrage und wenn O und H identisch sind handelt es sich wahrscheinlich um eine legitime Anfrage;
b) Feststellen, ob ein Mobilfunkteilnehmer im Interconnect zwischen Mobilfunknetzen von einem Mobilfunknetz R als präsent in diesem Mobilfunknetz R signalisiert wird, obwohl er in einem anderen Mobilfunknetz präsent ist, falls dies der Fall ist, wird eine Anfrage an die SS7 Schnittstelle zurückgewiesen, indem wenn ein Mobilfunknetz dem Home Location Register, HLR, des Heimatmobilfunknetzes eines Mobilfunkteilnehmers mittels "sendAuthenticationInfo"- und/oder "updateLocation"-Anfrage signalisiert hat, dass dieser Mobilfunkteilnehmer jetzt in dem anfragenden Mobilfunknetz präsent ist, wird mittels einer "provideSubscriberInfo"-Anfrage an das VLR V, Visitor Location Register, bei dem der Mobilfunkteilnehmer zuletzt präsent war, festgestellt, ob dieser dort immer noch präsent ist, und falls dies der Fall ist, wird die Anfrage verworfen und/oder
ob die unter Berücksichtigung einer statischen Tabelle ermittelte Reisezeit, gemessen vom letzten Kontakt zum VLR V, für eine Reise in das Land, in dem sich Mobilfunknetz R befindet, reichen würde, falls dies nicht der Fall ist, wird die Anfrage verworfen;
c) Feststellen, ob eine SS7/MAP-MSU im Interconnect zwischen Mobilfunknetzen zum Zwecke des Auffindens eines Mobilfunkteilnehmers massenhaft an verschiedene Netzelemente eines Mobilfunknetzes gesendet wurde, falls diese der Fall ist, erfolgt ein Zurückweisen der SS7/MAP-MSU;
d) Feststellen, ob eine missbräuchlichen Veränderung von Mobilfunkteilnehmerdaten durch Fälschen einer Absender-Adresse von SS7/MAP-MSUs im Interconnect zwischen Mobilfunknetzen vorliegt, falls diese der Fall ist, erfolgt ein Zurückweisen der SS7/MAP-MSU, wobei ein von einem HLR H eingehendes TC-BEGIN mit einem invoke für insertSubscriberData/deleteSubscriberData registriert und als Anfrage gepuffert wird, dem HLR H wird mit TC-Continue und einer zufälligen otid, origination transaction id, der Erfolg der insertSubscriberData/deleteSubscriberData-Anfrage mitgeteilt, sollte kein TC-END von dem HLR-H geschickt werden, handelt es sich wahrscheinlich um keine legitime Anfrage, sollte ein TC-END von dem HLR-H kommen wird die Anfrage, die gepuffert wurde, zu einem VLR V weitergeleitet.

2. Das Verfahren nach dem vorhergehenden Anspruch, wobei in Schritt a) des Anspruchs 1 immer dann, wenn die SS7/MAP-MSU eine Anfrage an ein VLR (Visitor Location Register), MSC (Mobile Switching Center) oder SGSN (Serving GPRS Support Node) enthalten, überprüft wird, ob die Adresse in der jeweiligen SS7/MAP-MSU von einem Heimatnetz des Mobilfunkteilnehmers stammt.

3. Das Verfahren nach einem oder mehreren der vorhergehenden Ansprüche, wobei in Schritt a)
eine Überprüfung der Art der Adresse, oder der SCCP Calling Address, eines Absenders in der Transportschicht auf eine oder mehrere der folgenden Merkmale erfolgt:
a. Enthält die Adresse keinen Global Title oder keinen Numbering Plan oder kein Encoding Scheme oder keinen Nature of Address Indicator, handelt es sich wahrscheinlich um keine legitime Anfrage;
b. Wenn das Encoding-Scheme-Feld nicht auf BCD, Binary-coded decimal, gesetzt ist, handelt es sich wahrscheinlich um keine legitime Anfrage c.Wenn das Nature-of-Address-Feld nicht auf "international number" gesetzt ist, handelt es sich wahrscheinlich um keine legitime Anfrage d. Wenn das Numbering-Plan-Feld weder "ISDN/telephony numbering plan (ITU-T E.163 & E.164)" noch "land mobile numbering plan (ITU-T E.212)" ist, handelt es sich wahrscheinlich um keine legitime Anfrage

4. Das Verfahren nach einem oder mehreren der vorhergehenden Ansprüche, wobei in Schritt a) des Anspruchs 1 eine Bestimmung des absendenden Mobilfunknetzes anhand eines Absenders, oder der SCCP Calling Address, in der Transportschicht erfolgt, wobei einer oder mehrere der folgenden Schritte ausgeführt wird:
a. Wenn der Numbering plan auf "ISDN/telephony numbering plan (ITU-T E.163 and E.164)" gesetzt ist:
i.Anfang des Global Titles in der Liste der von der ITU zugeteilten Telefonie-Country-Codes suchen, um das Land des Mobilfunknetzes zu bestimmen;
ii. Der nachfolgende Teil des Global Titles sollte in einer Liste der Network Codes aller PLMNs, Public Land Mobile Networks, des jeweiligen Landes gesucht werden, so dass ein Mobilfunknetz, O, bestimmt wird,
b. Wenn der Numbering plan "land mobile numbering plan (ITU-T E.212)" ist:
i. Anfang des Global Titles in der Liste der Mobile Country Codes, MCC, und Mobile Network Codes, MNC, der ITU suchen, so dass ein Mobilfunknetz O bestimmt wird;
und Bestimmung eines Heimat-Mobilfunktnetz H eines Mobilfunkteilnehmers, durch Ausführen eines oder mehrerer der folgenden Schritte:
c. Falls der Mobilfunkteilnehmer in einer Applikationsschicht über eine IMSI adressiert wird: Die ersten Ziffern der IMSI enthalten ebenfalls den MCC und MNC; der Anfang der IMSI wird in der Liste der Mobile Country Codes, MMC, und Mobile Network Codes, MNC, der ITU gesucht, um so das Heimatmobilfunknetz H zu bestimmten;
d. Falls der Mobilfunkteilnehmer in der Applikationsschicht über die MSISDN adressiert wird, so wird der Anfang der MSISDN in der Liste der von der ITU zugeteilten Telefonie-Country-Codes gesucht, so dass das Land des Mobilfunknetzes bestimmt wird, wobei über eine vordefinierte Tabelle eine Netzbetreibergruppe H₁...Hₙ bestimmt werden kann
und falls die Mobilfunknetze O und H nicht identisch sind, handelt es sich um keine legitime Anfrage, und wenn O und H identisch ist oder O in H₁...Hₙ ist, handelt es sich wahrscheinlich um eine legitime Anfrage.

5. Verfahren nach einem oder mehreren der vorhergehenden Ansprüche, wobei in Schritt b) des Anspruchs 1 erkannt wird, wenn ein Mobilfunknetz dem Home Location Register, HLR, des Heimatmobilfunknetzes eines Mobilfunkteilnehmers mittels "sendAuthenticationInfo"- und/oder "updateLocation"-Anfrage signalisiert hat, dass dieser Mobilfunkteilnehmer jetzt in dem anfragenden Mobilfunknetz präsent ist, wird mittels einer "provideSubscriberInfo"-Anfrage an das VLR, Visitor Location Register, bei dem der Mobilfunkteilnehmer zuletzt präsent war, festgestellt, ob dieser dort immer noch präsent ist, und falls dies der Fall ist, wird die "sendAuthenticationInfo"- und/oder "updateLocation"-Anfrage verworfen.

6. Verfahren nach Anspruch 1, wobei in Schritt b) folgende Schritte durchgeführt werden, um festzustellen, ob der Mobilfunkteilnehmer noch präsent ist:
Eine "sendAuthenticationInfo"- und/oder "updateLocation"-Anfrage von einem Mobilfunknetz R betreffend einen Mobilfunkteilnehmer wird an das HLR H des Heimatmobilfunknetzes gesendet;
- die "sendAuthenticationInfo"- und/oder "updateLocation"-Anfrage wird aufgehalten, falls sie nicht vom aktuellem VLR V stammt;
- das HLR H wird nach der Adresse des zuletzt für den Mobilfunkteilnehmer zuständigen VLR V gefragt;
- eine "provideSubscriberInfo"- Anfrage mit der IMSI des Mobilfunkendteilnehmers wird an das VLR V gesendet, dabei wird das Feld "currentLocation" gesetzt;
- das VLR V löst einen PagingRequest zum Mobilfunkteilnehmer aus, da die "currentLocation" angefordert wurde;
- Falls der Mobilfunkteilnehmer auf den PagingRequest antwortet, setzt das VLR V in seiner Antwort das "currentLocationRetrieved"-Feld; in diesem Fall ist die "sendAuthenticationInfo"- und/oder "updateLocation"-Anfrage des Mobilfunknetzes R offensichtlich fehlerhaft und wird zurückgewiesen;
falls der Mobilfunkteilnehmer auf den PagingRequest nicht antwortet, setzt das VLR V in seiner Antwort nicht das "currentLocationRetrieved"-Feld.

7. Verfahren nach dem vorhergehenden Anspruch, wobei folgende Schritte durchgeführt werden, um die Plausibilität der "sendAuthenticationInfo"- und/oder "updateLocation"-Anfrage weiter zu prüfen: Die vom HLR H angefragten Informationen werden umgehend an das VLR V weitergeleitet, wobei durch Auswertung des "ageOfLocationlnformation"-Feldes Folgendes erfolgt:
a. Ermitteln, wie lange es her ist, dass der Mobilfunkteilnehmer zuletzt Kontakt zum VLR V hatte, "ageOfLocationlnformation";
b. Ermitteln wie lange würde im günstigsten Falle eine Reise von dem Land, in dem sich geografisch VLR V befindet zu dem Land, in dem sich geografisch das Mobilfunknetz R befindet, dauern, wobei für die Ermittlung ungefähre Werte, die statisch in einer Tabelle hinterlegt sein können, ausreichen würden,
c. Falls die Zeit, die seit dem letzten Kontakt des Mobilfunkteilnehmers zum VLR V vergangen ist, geringer ist, als die günstigstenfalls nötige Reisezeit, ist die "sendAuthenticationInfo"- und/oder "updateLocation"-Anfrage des Mobilfunknetzes R offensichtlich fehlerhaft und wird zurückgewiesen; ist dies nicht der Fall, ist die sendAuthenticationInfo"- und/oder "updateLocation"-Anfrage des Mobilfunknetzes R wahrscheinlich berechtigt und wird weitergeleitet zum HLR H.

8. Verfahren nach einem oder mehreren der vorhergehenden Ansprüche, wobei in Schritt c) des Anspruchs 1, anhand von **SS7/MAP-MSU** pro Zeiteinheit entschieden wird, ob eine **SS7/MAP-MSU-Anfrage** zulässig ist oder verworfen wird, wobei Abgleichgruppen, Operationsgruppen und/oder Quellgruppen zu definiert sind, wobei bei einem eingehenden **SS7/MAP-MSU** zuerst eine zutreffende Abgleichgruppe bestimmt wird, dann wird die SS7/MAP Operation einer Operationsgruppe zugeschrieben, dann werden eine oder mehrere Quellgruppen bestimmt, um dann einen Zähler für ein Tupel aus Quell-, Operations- und Abgleichgruppe zu erhöhen, und dann, falls der Zähler in einem bestimmten Zeitraum zu schnell gestiegen ist, zu entscheiden, ob die SS7/MAP-MSU verworfen wird.

9. Verfahren nach einem oder mehreren der vorhergehenden Ansprüche, wobei in Schritt c) des Anspruchs 1, festgestellt wird, ob Anfragen bzgl. eines Mobilfunkteilnehmers massenhaft an verschiedene VLR, Visitor Location Register, MSC ,Mobile Switching, Center, oder SGSN, Serving GPRS Support Node, gesendet werden, indem der Zeitpunkt jeder Anfrage und die IMSI des Mobilfunkteilnehmers, oder eine davon abgeleitete eindeutige Identität, und der Global Title eines Empfängers für eine definierte Zeitspanne in einer Tabelle gespeichert werden, übersteigt dabei die Anzahl der verschiedenen Empfänger-Global-Title für eine IMSI, oder eine davon abgeleitete eindeutige Identität, eine definierte Grenze, handelt es sich um massenhafte Abfragen zum Auffinden des betroffenen Mobilteilnehmers im Mobilfunknetz.

10. Verfahren nach einem oder mehreren der vorhergehenden Ansprüche, wobei ein Feststellen der Zulässigkeit eines externen Systems durch Überprüfen der Absender- und Empfänger-Global-Title der SS7/MAP-MSU erfolgt;
wobei ein Absender- und Empfänger-Global-Title jeder SS7/MAP-MSU mit einer Liste W, whitelist, verglichen wird, die intern gehalten wird und konfigurierbar ist, ist der Absender- oder Empfänger-Global-Title in der Liste nicht zu finden, handelt es sich nicht um eine legitime Anfrage; und/oder
der Absender- und Empfänger-Global-Title jeder MSU wird mit einer Liste B, Blacklist, verglichen, die intern gehalten wird und konfigurierbar ist, ist der Absender- oder Empfänger-Global-Title in der Liste zu finden, handelt es sich nicht um eine legitime Anfrage; und/oder
der Absender- und Empfänger-Global-Title jeder MSU wird mit einer Liste aller in allen GSMA IR.21-Dokumenten der Roaming-Mobilfunknetze eines Netzbetreibers gelisteten Global Title verglichen, ist der Absender- oder Empfänger-Global-Title in der Liste nicht zu finden, handelt es sich wahrscheinlich nicht um eine legitime Anfrage.

11. Verfahren nach einem oder mehreren der vorhergehenden Ansprüche, um MTP/SCCP aus M2PA-, M2UA-, M3UA- und SUA-Paketen einer SCTP-Verbindung transparent zu extrahieren, mit einem System B, das zwischen zwei oder mehr STPs/Gateways angeordnet ist, wobei ein STP/Gateway A eine IP/SCTP Verbindung zum System B aufbaut, als Resultat baut das System B eine Verbindung zu einem STP/Gateway C auf, wobei die Protokoll-Implementierung zwischen den STP/Gateways A und C stattfindet; Datenpakete zwischen A und C werden durch System B analysiert, die jeweilige User-Adaption bestimmt und die MTP/SCCP-Payload extrahiert.

12. System **gekennzeichnet durch** eine Einrichtung und Konfiguration, die einen Ablauf eines Verfahrens nach einem oder mehreren der vorhergehenden Ansprüche durchführen.

## Claims

1. A method for securing a Signalling System No. 7, SS7, system interface providing access to a local area mobile network against an external system, comprising one or more of the following analysis steps:
a) determining whether an SS7/MAP MSU, Signalling System No. 7 Mobile Application Part Message Signal Unit, uses allowed addresses within a plurality of protocol layers in the interconnect between mobile radio networks, if no allowed addresses are available, the SS7/MAP-MSU is rejected by
determining the sender mobile radio network O by analysis of the calling party address in the SCCP layer, wherein:
If the numbering plan is set to "ISDN/telephony numbering plan (ITU-T E.163 and E.164)", the beginning of the address is searched in a list of all E.164 network operator prefixes to determine the sender mobile network O;
If the numbering plan is set to "land mobile numbering plan (ITU-T E.212)", the beginning of the address is searched in a predefined list of all E.212 mobile country codes, MCC, and mobile network codes, MNC, to determine the originator mobile network O;
by determining the home mobile radio network H, wherein: If the mobile subscriber is addressed in an application layer via an IMSI, the beginning of the IMSI is searched for in a predefined table of all E.212 Mobile Country Codes, MCC, and Mobile Network Codes, MNC, and thus the home mobile radio network H is determined;
if the mobile subscriber is addressed in an application layer via an MSISDN, the beginning of the MSISDN is searched for in the list of telephony country codes, MNC, allocated by the ITU, and thus the home mobile radio network H is determined;
if the mobile networks O and H are not identical, it is not a legitimate request and if O and H are identical, it is probably a legitimate request;
b) determining whether a mobile subscriber on the interconnection between mobile networks is signaled by a mobile network R as being present in that mobile network R, although mobile subscriber is present in another mobile network; if this is the case, a request to the SS7 interface is rejected in case a message to the Home Location Register, HLR, of the home mobile network of a mobile subscriber that has signalled by means of a "sendAuthenticationInfo" and/or "updateLocation" request that this mobile subscriber is now present in the requesting mobile network, a "provideSubscriberInfo" request to the VLR V, Visitor Location Register, where the mobile subscriber was last present, is used to determine whether the mobile subscriber is still present there, and if so, the request is rejected
and/or
whether the travel time, measured from the last contact with the VLR V, determined on the basis of a static table
would be sufficient for a trip to the country in which mobile network R is located, if not, the request is rejected;
c) determine whether an SS7/MAP MSU in the interconnection between mobile networks for the purpose of locating a mobile subscriber has been sent in masse to different network elements of a mobile network; if this is the case, the SS7/MAP MSU is rejected
d) determining whether an improper modification of mobile subscriber data by falsifying a sender address of SS7/MAP-MSUs in the interconnect between mobile networks is present; if this is the case, the SS7/MAP-MSU is rejected, wherein a TC-BEGIN received from a HLR H is registered with an invoke for insertSubscriberData/deleteSubscriberData and buffered as a request, the HLR H is informed of the success of the insertSubscriberData/deleteSubscriberData request with TC-Continue and a random otid, origination transaction id, if no TC-END is sent from the HLR H, it is probably not a legitimate request, if a TC-END is sent from the HLR H, the request that was buffered is forwarded to a VLR V

2. the method according to the previous claim, wherein in step a) of claim 1, whenever the SS7/MAP MSUs contain a request to a VLR (Visitor Location Register), MSC (Mobile Switching Center) or SGSN (Serving GPRS Support Node), it is checked whether the address in the respective SS7/MAP MSU originates from a home network of the mobile subscriber.

3. the method according to one or more of the preceding claims, where in step (a)
a check of the type of address, or SCCP Calling Address, of a shipper in the transport layer is performed for one or more of the following characteristics
a. If the address does not contain a Global Title or Numbering Plan or Encoding Scheme or Nature of Address Indicator, it is probably not a legitimate request;
b. If the Encoding Scheme field is not set to BCD, binary-coded decimal, it is unlikely to be a legitimate request
c.If the Nature-of-Address field is not set to "international number", it is unlikely that the request is legitimate
d. If the numbering plan field is neither "ISDN/telephony numbering plan (ITU-T E.163 & E.164)" nor "land mobile numbering plan (ITU-T E.212)", it is unlikely to be a legitimate request

4. the method according to one or more of the preceding claims, wherein in step a) of claim 1 a determination of the sending mobile network by means of a sender, or the SCCP Calling Address, is made in the transport layer, one or more of the following steps being carried out:
a. When the numbering plan is set to "ISDN/telephony numbering plan (ITU-T E.163 and E.164)
i. Look for the beginning of the Global Title in the list of telephony country codes allocated by the ITU to determine the country of the mobile network;
ii. The following part of the Global Title should be searched in a list of Network Codes of all PLMNs, Public Land Mobile Networks, of the respective country, so that a mobile network, O, is determined,
b. If the numbering plan is "land mobile numbering plan (ITU-T E.212)
i. Search the beginning of the Global Title in the list of Mobile Country Codes, MCC, and Mobile Network Codes, MNC, of the ITU, so that a mobile network O is determined;
and determining a home mobile network H of a mobile subscriber, by performing one or more of the following steps
c. If the mobile subscriber is addressed in an application layer via an IMSI: The first digits of the IMSI also contain the MCC and MNC; the beginning of the IMSI is searched for in the list of Mobile Country Codes, MMC, and Mobile Network Codes, MNC, of the ITU in order to determine the home mobile network H;
d. If the mobile subscriber is addressed via the MSISDN in the application layer, the beginning of the MSISDN is searched for in the list of telephony country codes assigned by the ITU, so that the country of the mobile radio network is determined, wherein a network operator group H1... Hn can be determined via a predefined table and if the mobile networks O and H are not identical, it is not a legitimate request, and if
O and H is identical or O in H1......Hn, it's probably a legitimate request.

5. The method according to one or more of the preceding claims, wherein in step b) of claim 1 it is recognized if a mobile network has signaled to the Home Location Register, HLR, of the home mobile network of a mobile subscriber by means of "sendAuthenticationInfo" and/or "updateLocation" request, that this mobile subscriber is now present in the requesting mobile network, a "provideSubscriberInfo" request to the VLR, Visitor Location Register, where the mobile subscriber was last present, is used to determine whether the mobile subscriber is still present there, and if so, the "sendAuthenticationInfo" and/or "updateLocation" request is rejected.

6. The method according to claim 1, wherein in step b) the following steps are performed to determine whether the mobile subscriber is still present:-
a "sendAuthenticationInfo" and/or "updateLocation" request from a mobile network R concerning a mobile subscriber is sent to the HLR H of the home mobile network;
- the "sendAuthenticationInfo" and/or "updateLocation" request is stopped if it does not originate from the current VLR V;
- the HLR H is asked for the address of the last VLR V responsible for the mobile subscriber;
- a "provideSubscriberInfo" request with the IMSI of the mobile subscriber is sent to the VLR V, setting the "currentLocation" field;
- the VLR V triggers a paging request to the mobile subscriber, as the "currentLocation" has been requested; - if the mobile subscriber responds
to the PagingRequest, the VLR V sets the "currentLocationRetrieved" field in its response; in this case, the "sendAuthenticationInfo" and/or "updateLocation" request from the mobile network R is obviously incorrect and is rejected;
if the mobile subscriber does not respond
to the PagingRequest, the VLR V does not set the "currentLocationRetrieved" field in its response

7. The Method according to the previous claim, wherein the following steps are performed to further check the plausibility of the "sendAuthenticationInfo" and/or "updateLocation" request: The information requested by the HLR H is immediately forwarded to the VLR V, where the following is done by evaluating the "ageOfLocationInformation" field:
a. Determine how long it is since the mobile subscriber last had contact with the VLR V, "ageOfLocationInformation";
b. Determining how long a journey from the country in which VLR V is geographically located to the country in which the mobile telephone network R is geographically located would take in the best case, wherein approximate values, which may be statically stored in a table, would be sufficient for the determination,
c. If the time that has elapsed since the last contact of the mobile subscriber with the VLR V is less than the best case scenario, the "sendAuthenticationInfo" and/or "updateLocation" request of the mobile network R is obviously incorrect and will be rejected; if this is not the case, the "sendAuthenticationInfo" and/or "updateLocation" request of the mobile network R is probably justified and will be forwarded to the VLR H.

8. The method according to one or more of the preceding claims, wherein in step c) of claim 1, a decision is made on the basis of **SS7/MAP-MSU** per time unit as to whether an **SS7/MAP-MSU request is** granted or is rejected, wherein adjustment groups, operation groups and/or source groups are to be defined, wherein in the case of an incoming **SS7/MAP-MSU,** an appropriate adjustment group is first determined, then assign the SS7/MAP operation to an operation group, then determine one or more source groups, then increment a counter for a tuple of source, operation, and adjustment group, and then, if the counter has increased too fast in a given time period, decide whether to discard the SS7/MAP MSU.

9. The method according to one or more of the preceding claims, wherein in step c) of claim 1, it is determined whether requests concerning of a mobile subscriber are sent in masse to different VLR, Visitor Location Register, MSC, Mobile Switching, Center, or SGSN, Serving GPRS Support Node, by specifying the time of each request and the IMSI of the mobile subscriber, or a unique identity derived therefrom, and the Global Title of a recipient are stored in a table for a defined period of time, if the number of different recipient Global Titles for an IMSI, or a unique identity derived from it, exceeds a defined limit, these are mass queries for finding the affected mobile subscriber in the mobile network.

10. The method according to one or more of the preceding claims, wherein a determination of the legitimacy of an external system is made by checking the sender and recipient global titles of the SS7/MAP MSU;
wherin a sender and recipient global title of each SS7/MAP MSU is compared with a list W, whitelist, which is kept internally and is configurable, if the sender or recipient global title is not found in the list, it is not a legitimate request;
and/or
the sender and recipient Global Title of each MSU is compared with a List B, Blacklist, which is kept internally and is configurable, if the sender or recipient Global Title is found in the list, it is not a legitimate request;
and/or
the sender and recipient Global Title of each MSU is compared with a list of all Global Titles listed in all GSMA IR.21 documents of a network operator's roaming mobile networks, if the sender or recipient Global Title is not found in the list, it is unlikely that the request is legitimate.

11. The method according to one or more of the preceding claims, to transparently extract MTP/SCCP from M2PA, M2UA, M3UA and SUA packets of an SCTP connection, with a system B placed between two or more STPs/gateways, wherein an STP/gateway A establishes an IP/SCTP connection to system B, as a result system B establishes a connection to an STP/gateway C, the protocol implementation taking place between the STP/gateways A and C; data packets between A and C are analyzed by system B, the respective user adaptation is determined and the MTP/SCCP payload is extracted.

12. System **characterised by** a device and configuration that performs a method according to one or more of the preceding claims.

## Revendications

1. Un procédé de sécurisation d'un système d'interface de signalisation n°7, SS7, fournissant un accès à un réseau radio mobile local par rapport à un système externe, comprenant une ou plusieurs des étapes d'analyse suivantes:
a) déterminer si une unité SS7/ MAP MSU, unité de signal de message de partie d'application mobile d'un système de signalisation n°7, utilise des adresses autorisées au sein d'une pluralité de couches de protocole dans l'interconnexion entre réseaux radio mobiles et, dans le cas où aucune adresse autorisée n'est disponible, la SS7 / MAP MSU est rejetée par
b) déterminer le réseau radio mobile O de l'émetteur au moyen d'une analyse de l'adresse de la partie appelante dans la couche SCCP, dans lequel :
si le schéma de numérotation est fixé sur « schéma de numérotation RNIS/téléphone (ITU-T E.163 et E.164) », le début de l'adresse est recherchée au sein d'une liste de tous les préfixes d'opérateur de réseau E.164 pour déterminer le réseau radio mobile O de l'émetteur ;
si le schéma de numérotation est fixé sur « schéma de numérotation mobile terrestre (ITU-T E.212) », le début de l'adresse est recherchée au sein d'une liste de tous les préfixes de tous les codes de pays mobiles E.212, MCC, et des codes de réseaux mobiles, MCN, pour le réseau radio mobile O de l'émetteur ;
en déterminant le réseau H de radio mobile domestique, dans lequel :
si l'abonné mobile est adressé dans une couche d'application via un IMSI, le début de l'IMSI est recherché dans une table prédéfinie de tous les codes de pays mobiles E.212, MCC, et des codes de réseaux mobiles, MNC, permettant ainsi la détermination du réseau H de radio mobile domestique ;
si l'abonné mobile est adressé dans une couche d'application via un MSISDN, le début de l'MSISDN est recherché dans une liste d'indicatifs téléphoniques de pays, MNC, alloués par l'ITU, et permettant ainsi la détermination du réseau H de radio mobile domestique ;
si les réseaux mobile O et H ne sont pas identiques, la requête n'est pas considérée comme étant régulière et dans le cas où O et H sont identiques, la requête est considérée comme étant probablement régulière ;
b) déterminer si, sur l'interconnexion entre les réseaux mobiles, un abonné mobile est signalé par un réseau mobile R comme étant présent dans ce réseau mobile R, bien que l'abonné mobile est présent sur un autre réseau mobile ; et dans ce cas, une requête à l'interface SS7 est rejetée dans le cas où un message au Registre de position Domestique, HLR, du réseau mobile domestique d'un abonné mobile a été signalé au moyen d'une requête « *sendAuthenticationInfo* » et/ou *« UpdateLocation* » suivant laquel cet abonné mobile est maintenant présent dans le réseau mobile demandeur, une requête « provideSubscriberInfo » vers la VLR V, Registre de Position du Visiteur, où l'abonné mobile étant présent en dernier, est utilisé pour déterminer si l'abonné mobile est encore présent là et, le cas échéant, la requête est rejetée,
et/ou
si le temps de trajet, mesuré depuis le dernier contact avec le VLR V, déterminé sur la base d'une table statique serait suffisante pour un voyage vers le pays dans lequel le réseau R mobile est situé et, dans le cas contraire, la requête est rejetée ;
c) déterminer si un MSU SS7/MAP dans une interconnexion entre des réseaux mobiles a été envoyé en masse à différents éléments de réseau d'un réseau mobile dans le but de localiser un abonné mobile ; et dans ce cas, le rejet de la MSU SS7/MAP;
d) déterminer si est présente une modification impropre de données d'abonné par une falsification d'une adresse d'émetteur des MSUs SSU/MAP dans l'interconnexion entre les réseau mobile ; et dans ce cas, le rejet de la MSU SSU/MAP, dans lequel une TC-BEGIN reçue depuis un HLR H est enregistré avec une invocation pour *insertSubscriberDataldeleteSubscriberData* et mises en tampon comme une requête, le H HLR est informé du succès de la requête *insertSubscriberDataldeleteSubscriberData* avec un *TC-Continue* et un *otid* aléatoire, identifiant de transaction d'origine, si aucun TC-EN n'est envoyé depuis le H HLR, la requête est considérée comme probablement non régulière, si un TC-END est transmis depuis le H HLR, la requête mise en tampon est transmise à un VLR V.

2. Le procédé selon la revendication précédente, dans lequel, dans l'étape a) de la revendication 1, lorsque les SS7/MAP MSU comportent une requête pour un VLR (Registre de Position de Visiteur), MSC (Centre de commutation mobile) ou SGSN (Nœud de support GPRS de service), l'on teste si l'adresse dans le SS7/MAP MSU respectif émane d'un réseau domestique de l'abonné mobile.

3. Le procédé selon une ou plusieurs des revendications précédentes, dans lequel à l'étape (a)
le type d'adresse ou l'adresse d'appel SCCP d'un expéditeur est vérifié dans la couche de transport pour une ou plusieurs des caractéristiques suivantes:
a. Si l'adresse ne contient pas un titre global ou un plan de numérotation ou un schéma de codage ou la nature de l'indicateur d'adresse, il ne s'agit probablement pas d'une demande légitime;
b. Si le champ du schéma de codage n'est pas défini sur BCD, décimal codé en binaire, il ne s'agit probablement pas d'une demande légitime
c. Si le champ Nature de l'adresse n'est pas défini sur "numéro international", il ne s'agit probablement pas d'une demande légitime
d. Si le champ du plan de numérotage n'est ni "Plan de numérotation RNIS/téléphonie (UIT-T E.163 & E.164)" ni "Plan de numérotation mobile terrestre (UIT-T E.212)", ce n'est probablement pas un demande légitime

4. Le procédé selon une ou plusieurs des revendications précédentes, dans lequel à l'étape a) de la revendication 1, on détermine le réseau radio mobile émetteur sur la base d'un émetteur ou de l'adresse d'appel SCCP dans la couche de transport, dans lequel une ou plusieurs des étapes suivantes sont effectuées:
a. Si le plan de numérotation est réglé sur "Plan de numérotation RNIS/téléphonie (UIT-T E.163 et E.164)":
i. Trouvez le début du Titre Global dans la liste des indicatifs de pays de téléphonie attribués par l'UIT pour déterminer le pays du réseau mobile;
ii. La partie suivante du Titre Global doit être recherchée dans une liste des codes de réseaux de tous les PLMN, réseaux mobiles terrestres publics, du pays respectif, de sorte qu'un réseau radio mobile, O, soit déterminé,
b. Si le plan de numérotage est "plan de numérotage mobile terrestre (UIT-T E.212)":
i. Trouvez le début du Titre Global dans la liste des codes de pays mobiles, MCC et codes de réseaux mobile, MNC, de l'UIT, de sorte qu'un réseau cellulaire O soit déterminé;
et déterminer un réseau cellulaire domestique H d'un abonné cellulaire en effectuant une ou plusieurs des étapes suivantes:
c. Si l'abonné radio mobile est adressé dans une couche d'application via un IMSI: les premiers chiffres de l'IMSI contiennent également le MCC et le MNC; le début de l'IMSI est recherché dans la liste des codes de pays mobiles, MMC, et codes de réseau mobile, MNC, de l'UIT afin de déterminer le réseau radio mobile domestique H;
d. Si l'abonné radio mobile est adressé dans la couche application via le MSISDN, le début du MSISDN est recherché dans la liste des codes de pays de téléphonie attribués par l'UIT, de sorte que le pays du réseau de radio mobile est déterminé, dans lequel un groupe d'opérateurs de réseau H1... Hn est déterminé via une table prédéfinie et si les réseaux mobile O et H ne sont pas identiques, la requête n'est pas régulière, et si O et H sont identiques ou de préférence O dans H1 ... Hn , alors la requête est probablement régulière.

5. Le procédé selon une ou plusieurs des revendications précédentes, dans lequel à l'étape b) de la revendication 1 l'on reconnaît qu'un réseau radio mobile a signalé le registre de localisation domestique, HLR, du réseau radio mobile domestique d'un abonné radio mobile au moyen d'une requête *"sendAuthenticationInfo"* et/ou *"updateLocation",* la présence de cet abonné mobile dans le réseau mobile demandeur, on utilise une demande *"provideSubscriberInfo"* au VLR, *Visitor Location Register,* dans laquelle l'abonné mobile était présent pour la dernière fois, pour déterminer si l'abonné mobile est encore présent là et, le cas échéant, la requête *"sendAuthenticationInfo"* et/ou *"updateLocation"* est rejetée.

6. Le procédé selon la revendication 1, dans lequel, à l'étape b), l'on effectue les étapes suivantes pour déterminer si l'abonné mobile est encore présent :
une requête *"sendAuthenticationInfo"* et/ou *"updateLocation"* d'un réseau radio mobile R relative à un abonné radio mobile est envoyée au HLR H du réseau radio mobile domestique;
- la requête *"sendAuthenticationInfo"* et/ou *"updateLocation"* est arrêtée si elle ne provient pas du VLR V actuel;
- Il est demandé au HLR H l'adresse du dernier VLR V responsable de l'abonné mobile;
- une requête *"provideSubscriberInfo"* avec l'IMSI de l'abonné mobile est envoyée au VLR V, le champ *"currentLocation"* étant défini;
- le VLR V déclenche une demande de radiomessagerie à l'abonné de la radio mobile depuis que *"currentLocation"* a été demandé;
- si l'abonné mobile répond à la demande de radiomessagerie, le VLR V définit le champ *"currentLocationRetrieved'* dans sa réponse; dans ce cas, la demande « *sendAuthenticationInfo* » et/ou "*updateLocation*" du réseau radio mobile R est manifestement incorrecte et est rejetée;
si l'abonné radio mobile ne répond pas à la demande de radiomessagerie, le VLR V ne définit pas le champ "*currentLocationRetrieved*" dans sa réponse.

7. Le procédé selon la revendication précédente, dans lequel les étapes suivantes sont effectuées afin de vérifier plus avant la plausibilité de la requête « *sendAuthenticationInfo*" et/ou "*updateLocation*": les informations demandées par le HLR H sont immédiatement transmises au VLR R, en évaluant le champ « ageOfLocationInformation":
a. déterminer depuis combien de temps l'abonné moible était en dernier contact avec VLR V, "*ageOfLocationInformation*";
b. déterminer la durée que prendrait dans le meilleur des cas un trajet entre le pays dans lequel VLR V est situé géographiquement et le pays dans lequel est situé le réseau radio mobile R, dans lequel des valeurs approximatives, pouvant être statistiquement stockées dans une table, serait suffisant pour la détermination ;
c. Si le temps qui s'est écoulé depuis le dernier contact de l'abonné mobile avec le VLR V est inférieur au temps de trajet dans le meilleur scénario, la demande "*sendAuthenticationInfo*" et/ou "*updateLocation*" du réseau mobile R est évidemment incorrecte et est rejetée; si ce n'est pas le cas, la demande « *sendAuthenticationInfo*" et/ou "*updateLocation*" du réseau radio mobile R est probablement justifiée et sera transmise au VLR H.

8. Le procédé selon une ou plusieurs des revendications précédentes, dans lequel à l'étape c) de la revendication 1, une décision est prise sur la base de SS7/MAP-MSU par unité de temps, quant à savoir si une requête SS7/MAP-MSU demande est acceptée ou rejetée, dans lequel des groupes d'ajustement, des groupes d'opérations et/ou des groupes sources doivent être définis, dans lequel dans le cas d'un SS7/MAP-MSU arrivant, un groupe d'ajustement approprié est d'abord déterminé, puis affectant l'opération SS7/MAP à un groupe d'opération, puis déterminer un ou plusieurs groupes sources, puis incrémenter un compteur pour tuple de groupes d'ajustement, d'opérations et sources, et puis, si le compteur augmente trop vite dans un certain laps de temps, décider s'il faut abandonner le SS7/MAP-MSU.

9. Le procédé selon une ou plusieurs des revendications précédentes, dans lequel, à l'étape c) de la revendication 1, on détermine si des requêtes concernant un abonné mobile transmis en masse à différents VLR, registres de localisation des visiteurs, MSC, commutation mobile, centre ou SGSN, nœud de support GPRS de service, sont envoyés en stockant l'heure de chaque demande et l'IMSI de l'abonné mobile, ou une identité unique dérivée de celle-ci, et le Titre Global d'un destinataire sont stockés dans une table pendant une période définie, si le nombre de Titres Globaux de destinataires différents pour un IMSI, ou une identité unique qui en dérive, dépasse une limite prédéfinie, l'on a des requêtes de masse pour trouver l'abonné mobile concerné dans le réseau radio mobile.

10. Le procédé selon une ou plusieurs des revendications précédentes, dans lequel une détermination de la légitimité d'un système externe est effectué en testant les titres globaux de l'émetteur et du destinataire du SS7/MAP MSU ;
dans lequel un titre global d'émetteur ou de destinataire de chaque SS7/MAP MSU est comparé avec une liste W, liste blanche, qui est conservée en interne et est configurable, si le titre global de l'expéditeur ou du destinataire est introuvable dans la liste, il ne s'agit pas d'une demande légitime;
et/ou
le titre global de l'expéditeur et du destinataire de chaque MSU est comparé à une liste B, liste noire, qui est conservée en interne et est configurable, si le Titre Global de l'émetteur ou du destinataire est trouvé dans la liste, ce n'est pas une requête légitime ;
et/ou
le titre global de l'expéditeur et du destinataire de chaque MSU est comparé à une liste de tous les titres mondiaux répertoriés dans tous les documents GSMA IR.21 des réseaux radio mobiles itinérants d'une radio mobile, si le titre global de l'expéditeur ou du destinataire se trouve dans la liste, la demande n'est probablement pas légitime.

11. Le procédé selon une ou plusieurs des revendications précédentes, afin d'extraire de manière transparente des paquets MTP/SCCP, M2PA, M2UA, M3UA et SUA d'une connexion SCTP, avec un système B qui est agencé entre deux ou plusieurs STP/passerelles, dans lequel un STP/passerelle_A établit une connexion IP/SCTP au système B, en conséquence le système B établit une connexion à un STP/passerelle_C, la mise en œuvre du protocole entre STP/ passerelles A et C, des paquets de données entre A et C étant analysés par le système B, l'adaptation d'utilisateur respective étant déterminée avec l'extraction de la charge utile MTP/SCCPP.

12. Un système **caractérisé par** un dispositif et une configuration qui exécute une séquence d'un procédé selon une ou plusieurs des revendications précédentes.
